# EUROPÄISCHE PATENTANMELDUNG

(11) **EP 4 567 282 A1**
(43) Veröffentlichungstag der Anmeldung: **11.06.2025**
(21) Anmeldenummer: 24214534.0
(22) Anmeldetag: 21.11.2024
(51) Int. Cl.: F04D 29/62, F04D 13/06

(54) **VORRICHTUNG ZUM WECHSELN EINER PUMPENEINHEIT EINER ZENTRIFUGALPUMPE SOWIE ZENTRIFUGALPUMPE**

(30) Priorität: 05.12.2023 EP 23214296
(71) Anmelder: Levitronix GmbH, 8048 Zürich (CH)
(72) Erfinder: Schmid, Alexander, 8915 Hausen am Albis (CH); Schneider, Samuel, 8152 Opfikon (CH); Barletta, Natale, 8048 Zürich (CH)
(74) Vertreter: IPS Irsch AG

(57) **Zusammenfassung**

Es wird eine Vorrichtung vorgeschlagen zum Wechseln einer Pumpeneinheit (50) einer Zentrifugalpumpe (200), welche die Pumpeneinheit (50) und einen Stator (100) umfasst, der sich in einer axialen Richtung (A) von einem ersten axialen Ende (101) bis zu einem zweiten axialen Ende (102) erstreckt, wobei an dem ersten axialen Ende (101) eine becherförmige Ausnehmung (121) vorgesehen ist, in welche die Pumpeneinheit (50) einsetzbar ist, wobei die Pumpeneinheit (50) ein Pumpengehäuse (52) mit einem Becher (531) umfasst, welcher in die becherförmige Ausnehmung (121) des Stators (100) einsetzbar ist, wobei in dem Pumpengehäuse (52) ein Rotor (51) zum Fördern eines Fluids angeordnet ist, der einen magnetisch wirksamen Kern (511) aufweist, wobei der Rotor (51) um die axiale Richtung (A) rotierbar ist, und wobei der Stator (100) für einen berührungslos magnetischen Antrieb und eine berührungslos magnetische Lagerung des Rotors (51) ausgestaltet ist, wobei der Rotor (51) zumindest in axialer Richtung (A) passiv magnetisch bezüglich des Stators stabilisiert ist. Die Vorrichtung umfasst eine Betätigungseinrichtung (6), mit welcher eine mechanische Kraft auf die Pumpeneinheit (50) ausübbar ist, wobei die mechanische Kraft in der axialen Richtung (A) wirkt und derart gerichtet ist, dass sie die Pumpeneinheit (50) in axialer Richtung (A) von dem Stator (100) trennt. Ferner wird eine Zentrifugalpumpe zum Fördern eines Fluids vorgeschlagen, die eine solche Vorrichtung umfasst.

## Beschreibung

Die Erfindung betrifft eine Vorrichtung zum Wechseln einer Pumpeneinheit einer Zentrifugalpumpe gemäss dem Oberbegriff des unabhängigen Patentanspruchs. Die Erfindung betrifft ferner eine Zentrifugalpumpe mit einer solchen Vorrichtung.

Es sind Zentrifugalpumpen bekannt, welche eine Pumpeneinheit und einen Stator umfassen, wobei in der Pumpeneinheit ein Rotor vorgesehen ist, welcher das Flügelrad der Zentrifugalpumpe bildet. Die Pumpeneinheit ist in den Stator einsetzbar und bildet mit dem Stator einen elektromagnetischen Drehantrieb. Dabei ist der Rotor in der Pumpeneinheit mittels des Stators berührungslos magnetisch lagerbar und berührungslos zur Rotation um eine axiale Richtung antreibbar. Solche Zentrifugalpumpen werden beispielsweise von der Anmelderin unter der Produktbezeichnung Levitronix^{®} BPS Pumpen vertrieben.

Bei diesen Zentrifugalpumpen ist in einer der axialen Enden des Stators eine becherförmige Ausnehmung vorgesehen, in welche die Pumpeneinheit einsetzbar ist, wobei die Pumpeneinheit ein Pumpengehäuse mit einem Becher umfasst, welcher in die becherförmige Ausnehmung des Stators einsetzbar ist.

Der Stator und der Rotor bilden einen elektromagnetischen Drehantrieb, der nach dem Prinzip des lagerlosen Motors ausgestaltet ist. Mit dem Begriff lagerloser Motor ist dabei ein elektromagnetischer Drehantrieb gemeint, bei welchem der Rotor vollkommen magnetisch bezüglich des Stators lagerbar ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation um eine durch die axiale Richtung definierte Solldrehachse bewirkt, und welches zum anderen eine beliebig einstellbare Querkraft auf den Rotor ausübt, sodass dessen radiale Position aktiv steuerbar bzw. regelbar ist. Somit sind drei Freiheitsgrade des Rotors aktiv regelbar, nämlich seine Rotation sowie seine radiale Position (zwei Freiheitsgrade). Bezüglich dreier weiterer Freiheitsgrade, nämlich seiner Position in axialer Richtung und Verkippungen bezüglich der zur Solldrehachse senkrechten radialen Ebene (zwei Freiheitsgrade), ist der Rotor passiv magnetisch, das heisst nicht ansteuerbar, durch Reluktanzkräfte gelagert bzw. stabilisiert. Das Nichtvorhandensein eines separaten magnetischen Lagers bei vollständiger magnetischer Lagerung des Rotors ist die Eigenschaft, welcher der lagerlose Motor seinen Namen verdankt. In dem Lager- und Antriebsstator lässt sich die Lagerfunktion nicht von der Antriebsfunktion separieren.

Ein besonderer Vorteil solcher Zentrifugalpumpen ist die Ausgestaltung des Rotors als Integralrotor, der sowohl der Rotor des elektromagnetischen Drehantriebs ist und somit der Rotor des elektromagnetischen Antriebs und der magnetischen Lagerung als auch der Rotor der Pumpe, welcher das Fluid fördert. Hieraus resultiert der Vorteil einer sehr kompakten und platzsparenden Ausgestaltung.

Zentrifugalpumpen mit berührungslos magnetisch gelagerten und angetriebenen Rotoren, beispielsweise solche, die nach dem Prinzip des lagerlosen Motors ausgestaltet und betrieben werden, haben sich in einer Vielzahl von Anwendungen bewährt. Aufgrund der Abwesenheit von mechanischen Lagern eignen sich solche Zentrifugalpumpen für Anwendungen, bei denen sehr empfindliche Substanzen gefördert werden, beispielsweise Blutpumpen, oder bei denen sehr hohe Anforderungen an die Reinheit gestellt werden, beispielsweise in der Halbleiterindustrie, der pharmazeutischen Industrie, der biotechnologischen Industrie, oder bei denen abrasive oder aggressive Substanzen gefördert werden, welche mechanische Lager sehr schnell zerstören würden, beispielsweise Pumpen für Slurry, Schwefel-, Phosphorsäure oder andere Chemikalien in der Halbleiterindustrie.

In der biotechnologischen Industrie oder in der pharmazeutischen Industrie werden solche Zentrifugalpumpen beispielsweise im Zusammenhang mit Bioreaktoren eingesetzt, z. B. zum Fördern der Fluide in den oder aus dem Bioreaktor. Gerade bei solchen Anwendungen ist die Sterilität in Prozessen, in denen beispielsweise biologische Aktivitäten stattfinden, von sehr grosser Bedeutung. Das Sterilisieren der Vorrichtungen, beispielsweise mittels Dampfsterilisation, stellt sehr häufig einen zeit- und kostenintensiven Faktor dar. Deshalb besteht heute die zunehmende Tendenz, für solche biotechnologischen Prozesse Komponenten der jeweiligen Vorrichtung als Einmalteile auszugestalten, um aufwändige Sterilisationsprozesse zu vermeiden oder auf ein Minimum zu reduzieren. Insbesondere werden diejenigen Komponenten, die während des Prozesses mit den biologischen Substanzen in direkten Kontakt kommen, häufig als Einmalteile ausgestaltet. Der Begriff Einmalteile (single use) bezeichnet dabei Teile bzw. Komponenten, die bestimmungsgemäss nur einmal benutzt werden dürfen. Nach der Anwendung werden die Einmalteile entsorgt und für die nächste Anwendung durch neue, das heisst noch nicht gebrauchte Einmalteile ersetzt.

Es sind daher Zentrifugalpumpen bekannt, bei welchen die Pumpeneinheit als Einmalteil ausgestaltet wird. Nach der jeweiligen Anwendung wird die Pumpeneinheit von dem Stator getrennt und durch eine neue, noch nicht gebrauchte Pumpeneinheit ersetzt. Im Hinblick auf eine möglichst hohe Effizienz ist es dabei wünschenswert, dass die Pumpeneinheit in sehr einfacher sowie schneller Weise und mit einem möglichst geringen Aufwand ausgewechselt werden können.

Hierzu ist es beispielsweise bekannt, die Pumpeneinheit mittels eines Bajonettverschlusses in der becherförmigen Ausnehmung des Stators zu verriegeln. Zum Wechseln der Pumpeneinheit wird dann der Bajonettverschluss geöffnet, die Pumpeneinheit durch eine neue Pumpeneinheit ersetzt und der Bajonettverschluss wieder verschlossen.

Auch wenn sich diese Ausgestaltung in der Praxis sehr gut bewährt hat, so besteht aber Verbesserungsbedarf, insbesondere bei solchen Zentrifugalpumpen, die für sehr hohe Leistungen ausgelegt sind, beispielsweise mit einem elektrischen Drehantrieb, der für eine Leistung von mehr als 4kW ausgelegt ist. Solche Zentrifugalpumpen umfassen häufig sehr starke Permanentmagnete, die im Rotor und/oder im Stator angeordnet sind. Gerade bei solchen Ausgestaltungen wirken enorme magnetische Kräfte zwischen dem Rotor und dem Stator. Die passiven magnetischen Kräfte, also beispielsweise die Reluktanzkräfte, wirken auch dann noch, wenn die Wicklungen des Stators nicht mehr mit Strom beaufschlagt werden. Wenn dann die Pumpeneinheit gewechselt werden soll, so müssen diese enormen magnetischen Kräfte zwischen dem Rotor und dem Stator überwunden werden. Hier besteht ein ganz erhebliches Risiko, dass sich das Betriebspersonal beim Wechseln der Pumpeneinheit verletzt oder das Komponenten der Zentrifugalpumpe beschädigt werden. Häufig sind die magnetischen Kräfte so gross, dass es kaum noch oder nur mit sehr grossem Aufwand möglich ist, die Pumpeneinheit von Hand von dem Stator zu trennen.

Ausgehend von diesem Stand der Technik ist es daher eine Aufgabe der Erfindung, eine Vorrichtung zum Wechseln einer Pumpeneinheit einer Zentrifugalpumpe mit berührungslos magnetisch angetriebenem und gelagertem Rotor vorzuschlagen, die eine sehr einfache, schnelle und gefahrlose Trennung der Pumpeneinheit von dem Stator ermöglicht. Zudem ist es eine Aufgabe der Erfindung, eine Zentrifugalpumpe mit einer solchen Vorrichtung zum Wechseln der Pumpeneinheit vorzuschlagen.

Der diese Aufgabe lösende Gegenstand der Erfindung ist durch die Merkmale des unabhängigen Patentanspruchs gekennzeichnet.

Erfindungsgemäss wird also eine Vorrichtung vorgeschlagen zum Wechseln einer Pumpeneinheit einer Zentrifugalpumpe, welche die Pumpeneinheit und einen Stator umfasst, der sich in einer axialen Richtung von einem ersten axialen Ende bis zu einem zweiten axialen Ende erstreckt, wobei an dem ersten axialen Ende eine becherförmige Ausnehmung vorgesehen ist, in welche die Pumpeneinheit einsetzbar ist, wobei die Pumpeneinheit ein Pumpengehäuse mit einem Becher umfasst, welcher in die becherförmige Ausnehmung des Stators einsetzbar ist, wobei in dem Pumpengehäuse ein Rotor zum Fördern eines Fluids angeordnet ist, der einen magnetisch wirksamen Kern aufweist, wobei der Rotor um die axiale Richtung rotierbar ist, und wobei der Stator für einen berührungslos magnetischen Antrieb und eine berührungslos magnetische Lagerung des Rotors ausgestaltet ist, wobei der Rotor zumindest in axialer Richtung passiv magnetisch bezüglich des Stators stabilisiert ist. Die Vorrichtung umfasst eine Betätigungseinrichtung, mit welcher eine mechanische Kraft auf die Pumpeneinheit ausübbar ist, wobei die mechanische Kraft in der axialen Richtung wirkt und derart gerichtet ist, dass sie die Pumpeneinheit in axialer Richtung von dem Stator trennt.

Mit einer solchen Vorrichtung, mit der eine mechanische Kraft in axialer Richtung auf die Pumpeneinheit ausübbar ist, kann die Pumpeneinheit in besonders einfacher Weise und mit einem nur sehr geringen händischen Kraftaufwand durch das Bedienpersonal von dem Stator getrennt werden. Hieraus resultiert eine erhebliche Reduzierung des Verletzungsrisikos für das Bedienpersonal, und auch die Pumpeneinheit ist zuverlässig gegen Beschädigungen geschützt. Ferner ermöglicht die Vorrichtung ein besonders schnelles Austauschen der Pumpeneinheit, was insbesondere, aber nicht nur, für solche Anwendungen beispielsweise in der Biotechnologie ein grosser Vorteil ist, bei denen die Pumpeneinheit als Einmalteil ausgestaltet ist. Denn gerade bei solchen Ausführungsformen, bei welchen die Pumpeneinheit als Einmalteil ausgestaltet ist, ist es ein wesentlicher Aspekt, dass die Pumpeneinheit mit möglichst geringem Zeitaufwand ersetzt bzw. ausgewechselt werden kann.

Aber auch bei solchen Anwendungen, bei denen die Pumpeneinheit für den Mehrfachgebrauch bzw. für eine Wiederverwendung ausgestaltet ist, stellt die einfache und schnelle Trennbarkeit der Pumpeneinheit vom Stator ein Vorteil dar, beispielsweise, wenn die Pumpeneinheit oder Komponenten der Pumpeneinheit gewartet, repariert oder ersetzt werden müssen. Beispielsweise kann es notwendig sein, den Rotor, welcher das Flügelrad bzw. das Laufrad der Zentrifugalpumpe bildet, auszutauschen.

Vorzugsweise ist die Vorrichtung am Stator fixierbar oder relativ zum Stator fixierbar.

Es sind Ausgestaltungen möglich, bei welchen die Vorrichtung zum Wechseln der Pumpeneinheit ständig, also nicht nur beim beabsichtigten Wechseln der Pumpeneinheit, an dem Stator befestigt ist. In anderen Ausgestaltungen wird die Vorrichtung nur für den Wechselvorgang am Stator fixiert. Nachdem die Pumpeneinheit gewechselt ist, wird die Vorrichtung abmontiert und vom Stator getrennt. Auch sind Ausgestaltungen möglich, bei denen die Vorrichtung relativ zum Stator fixierbar ist, beispielsweise indem die Vorrichtung und der Stator auf einer gemeinsamen Schiene oder Ähnlichem fixiert werden.

Gemäss einer bevorzugten Ausführungsform ist die Betätigungseinrichtung so ausgestaltet, dass die mechanische Kraft an der becherförmigen Ausnehmung im Stator oder an dem Becher des Pumpengehäuses angreift. Die Betätigungseinrichtung drückt dann gegen den Boden des Bechers oder gegen den Boden der becherförmigen Ausnehmung, sodass die Pumpeneinheit allein oder die Pumpeneinheit zusammen mit der becherförmigen Ausnehmung in axialer Richtung aus dem Stator herausgedrückt wird.

Es ist eine bevorzugte Ausgestaltung, dass die Betätigungseinrichtung einen Kolben umfasst, der in axialer Richtung verschiebbar ist, wobei der Kolben in eine zentral angeordnete Öffnung im Stator einführbar ist, und das Verschieben des Kolbens relativ zum Stator die mechanische Kraft erzeugt, welche die Pumpeneinheit in axialer Richtung vom Stator trennt. Die zentral angeordnete Öffnung erstreckt sich vorzugsweise von dem zweiten axialen Ende des Stators in axialer Richtung bis an die becherförmige Ausnehmung oder bis an den Becher der Pumpeneinheit. In dieser zentral angeordneten Öffnung ist der Kolben angeordnet, der relativ zum Stator in axialer Richtung verschiebbar ist. Durch Verschieben des Kolbens wird dann die Pumpeneinheit allein oder die Pumpeneinheit zusammen mit der becherförmigen Ausnehmung in axialer Richtung aus dem Stator herausgedrückt. Falls der Kolben direkt auf den Becher der Pumpeneinheit einwirkt, so ist die becherförmige Ausnehmung mit einer Öffnung versehen, durch welche der Kolben hindurchgreifen kann.

Das Verschieben des Kolbens in axialer Richtung kann beispielsweise mittels einer Gewindekurbel erfolgen, die manuell betätigt wird oder auch motorisch, beispielsweise mittels eines Spindelmotors.

Eine bevorzugte Massnahme besteht darin, dass die Vorrichtung eine Führungsschiene umfasst, die am Stator fixierbar ist, wobei auf der Führungsschiene ein in axialer Richtung verschiebbares Stützelement angeordnet ist, welches die Pumpeneinheit beim Trennen von dem Stator gegen Verkippungen schützt. Die Führungsschiene mit dem Stützelement sichern die Pumpeneinheit sowohl beim Einsetzen der Pumpeneinheit in den Stator als auch beim Trennen der Pumpeneinheit vom Stator gegen Verkippungen bezüglich der axialen Richtung und gewährleisten, dass die Pumpeneinheit sich nicht im Stator verkanten kann.

Gemäss einer weiteren bevorzugten Ausgestaltung ist die Betätigungseinrichtung so ausgestaltet ist, dass die mechanische Kraft an einem Bereich des Pumpengehäuses angreift, welcher ausserhalb der becherförmigen Ausnehmung des Stators angeordnet ist. Die Krafteinwirkung auf die Pumpeneinheit erfolgt hier also an einem Bereich der Pumpeneinheit, der nicht in der becherförmigen Ausnehmung des Stators angeordnet ist, wenn die Pumpeneinheit in den Stator eingesetzt ist.

Natürlich sind auch solche Ausgestaltungen möglich, bei welchen eine Krafteinwirkung auf die Pumpeneinheit sowohl auf den Bereich der Pumpeneinheit erfolgt, der in der becherförmigen Ausnehmung des Stators angeordnet ist, als auch auf den Bereich, der nicht in der becherförmigen Ausnehmung des Stators angeordnet ist.

Eine weitere bevorzugte Massnahme besteht darin, dass die Betätigungseinrichtung ein Federelement umfasst, das in eine zentral angeordneten Öffnung im Stator einführbar ist, wobei das Federelement so ausgestaltet ist, dass es beim Einsetzten der Pumpeneinheit in die becherförmige Ausnehmung in axialer Richtung gespannt wird. Solange die Pumpeneinheit im Stator fixiert ist, steht das Federelement unter Spannung. Soll nun die Pumpeneinheit vom Stator getrennt werden, so wird diese Spannung des Federelements dazu genutzt, um das Trennen der Pumpeneinheit vom Stator zu unterstützen oder zu bewirken.

Das Federelement ist dabei also derart ausgestaltet und angeordnet, dass das Federelement beim Einsetzen der Pumpeneinheit gespannt wird, d.h. dass die Pumpeneinheit gegen die Kraft des Federelements in den Stator eingesetzt wird. Beim Einsetzen der Pumpeneinheit wirkt das Federelement dämpfend, woraus der Vorteil resultiert, dass den starken magnetischen Kräften entgegengewirkt werden kann, welche versuchen, die Pumpeneinheit in den Stator hineinzuziehen. Somit lässt sich die Pumpeneinheit schonend und sanft in den Stator einsetzen. Insbesondere lässt es sich zuverlässig vermeiden, dass die Pumpeneinheit beim Einsetzen stark am Stator anschlägt. Beim Trennen der Pumpeneinheit vom Stator übt das gespannte Federelement eine in axialer Richtung wirkende Kraft auf die Pumpeneinheit aus, welche die Trennung vom Stator unterstützt oder bewirkt.

Gemäss einer bevorzugten Ausführungsform umfasst die Vorrichtung eine Montageeinrichtung, die an dem ersten axialen Ende des Stators fixierbar ist, wobei die Montageeinrichtung einen ringförmigen Sockel aufweist, welcher für das Umfassen des Pumpengehäuses ausgestaltet ist, wobei auf dem Sockel mehrerer Führungselemente angeordnet sind, um das Pumpengehäuse in axialer Richtung in die becherförmige Ausnehmung des Stators zu führen, wobei mehrere Befestigungselemente zum Fixieren des Pumpengehäuses vorgesehen sind, und wobei die Montageeinrichtung mehrere elastische Elemente umfasst, welche in axialer Richtung gespannt sind, wenn die Pumpeneinheit im Stator fixiert ist.

Beim Einsetzen der Pumpeneinheit in den Stator werden die elastischen Elemente, beispielsweise Federn, gespannt, das heisst die Pumpeneinheit wird gegen die Federkraft der elastischen Elemente in den Stator eingesetzt. Beim Trennen der Pumpeneinheit vom Stator verursachen die elastischen Elemente die mechanische Kraft, die in axialer Richtung wirkt, und die Pumpeneinheit aus dem Stator zu drücken versucht.

In einer weiteren bevorzugten Ausführungsform umfasst die Vorrichtung einen Montagering, der an dem ersten axialen Ende des Stators so fixierbar ist, dass er um die becherförmige Ausnehmung herum angeordnet ist, wobei auf dem Montagering eine erste und eine zweite Führungsstange angeordnet sind, welche sich jeweils in axialer Richtung erstrecken, wobei an der ersten Führungsstange eine schwenkbare Halteeinrichtung zum Halten der Pumpeneinheit vorgesehen ist, welche in eine Haltestellung schwenkbar ist, in welcher die Halteeinrichtung an der zweiten Führungsstange anliegt, und wobei mindestens ein Spannhebel vorgesehen ist, durch dessen Betätigung die Halteeinrichtung in axialer Richtung entlang der Führungsstangen verschiebbar ist. Bei dieser Ausführungsform wird die mechanische Kraft mit mindestens einem Spannhebel erzeugt, welcher die Pumpeneinheit in axialer Richtung entlang der Führungsstangen verschieben kann.

Dabei ist es bevorzugt, dass an einer der Führungsstangen ein Verriegelungselement vorgesehen ist, mit welchem die Halteeinrichtung an der Führungsstange fixierbar ist, wenn das Pumpenggehäuse in der becherförmigen Ausnehmung angeordnet ist. Hierdurch wird eine unbeabsichtigte Trennung der Pumpeneinheit vom Stator zuverlässig vermieden.

In einer weiteren bevorzugten Ausführungsform umfasst die Vorrichtung einen Bajonettring, der an dem ersten axialen Ende des Stators so fixierbar ist, dass er um die becherförmige Ausnehmung herum angeordnet ist, wobei der Bajonettring für eine Bajonettverbindung mit dem Pumpengehäuse der Pumpeneinheit ausgestaltet ist.

Vorzugsweise ist der Bajonettring derart ausgestaltet, dass das Pumpengehäuse durch eine Drehbewegung relativ zum Bajonettring um die axiale Richtung, eine anschliessende Bewegung in axialer Richtung und eine daran anschliessende Drehbewegung um die axiale Richtung in dem Bajonettring fixierbar ist.

An dem Bajonettring ist vorzugsweise ein Sicherungspin vorgesehen, mit welchem die Pumpeneinheit in dem Bajonettring fixierbar ist, wenn das Pumpenggehäuse in der becherförmigen Ausnehmung angeordnet ist. Hierdurch wird eine unbeabsichtigte Trennung der Pumpeneinheit vom Stator zuverlässig vermieden.

Durch die Erfindung wird ferner eine Zentrifugalpumpe zum Fördern eines Fluids vorgeschlagen, mit einer Pumpeneinheit, und einem Stator, der sich in einer axialen Richtung von einem ersten axialen Ende bis zu einem zweiten axialen Ende erstreckt, wobei an dem ersten axialen Ende eine becherförmige Ausnehmung vorgesehen ist, in welche die Pumpeneinheit einsetzbar ist, wobei die Pumpeneinheit ein Pumpengehäuse mit einem Becher umfasst, welcher in die becherförmige Ausnehmung des Stators einsetzbar ist, wobei in dem Pumpengehäuse ein Rotor zum Fördern des Fluids angeordnet ist, der einen magnetisch wirksamen Kern aufweist, wobei der Rotor mit dem Stator einen elektromagnetischen Drehantrieb bildet, wobei der Stator für einen berührungslos magnetischen Antrieb und eine berührungslos magnetische Lagerung des Rotors ausgestaltet ist, und wobei der Rotor zumindest in axialer Richtung passiv magnetisch stabilisiert ist. Es ist eine Vorrichtung zum Wechseln der Pumpeneinheit vorgesehen, welche erfindungsgemäss ausgestaltet ist.

Gemäss einer bevorzugten Ausgestaltung ist die Vorrichtung zum Wechseln der Pumpeneinheit so ausgestaltet, dass sie jeweils nach dem Wechseln der Pumpeneinheit von der Zentrifugalpumpe entfernbar ist.

Natürlich sind auch solche Ausgestaltungen möglich, bei welchen die Vorrichtung zum Wechseln der Pumpeneinheit immer, also nicht nur beim Wechseln der Pumpeneinheit, an der Zentrifugalpumpe fixiert.

In einer besonders bevorzugten Ausgestaltung der Zentrifugalpumpe ist der elektromagnetische Drehantrieb als Tempelmotor ausgestaltet, wobei der Stator eine Mehrzahl von Spulenkernen aufweist, von denen jeder einen Längsschenkel umfasst, welcher sich von einem ersten Ende in axialer Richtung bis zu einem zweiten Ende erstreckt, sowie einen Querschenkel, welcher an dem zweiten Ende des Längsschenkels angeordnet ist, und sich in einer radialen Richtung erstreckt, die senkrecht zur axialen Richtung ist, wobei die Spulenkerne bezüglich der Umfangsrichtung um den Rotor herum angeordnet sind, sodass der Rotor zwischen den Querschenkeln der Spulenkerne angeordnet ist, und wobei an jedem Längsschenkel mindestens eine konzentrierte Wicklung vorgesehen ist, welche den jeweiligen Längsschenkel umgibt.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen (teilweise im Schnitt):
- Fig. 1a:: eine perspektivische Darstellung einer Zentrifugalpumpe, teilweise im Schnitt,
- Fig. 1b:: wie Fig. 1a, jedoch für eine Variante der Zentrifugalpumpe,
- Fig. 2:: eine Schnittdarstellung der Pumpeneinheit der Zentrifugalpumpe aus Fig. 1a oder Fig. 1b,
- Fig. 3:: eine perspektivische Explosionsdarstellung eines ersten Ausführungsbeispiels einer Vorrichtung zum Wechseln der Pumpeneinheit einer Zentrifugalpumpe, teilweise im Schnitt,
- Fig. 4:: eine perspektivische Darstellung des ersten Ausführungsbeispiels, fixiert an einer Zentrifugalpumpe,
- Fig. 5:: wie Fig. 4, jedoch beim Wechseln der Pumpeneinheit,
- Fig. 6:: eine perspektivische Explosionsdarstellung eines zweiten Ausführungsbeispiels einer Vorrichtung zum Wechseln der Pumpeneinheit einer Zentrifugalpumpe, teilweise im Schnitt,
- Fig. 7.:: eine perspektivische Darstellung des zweiten Ausführungsbeispiels, fixiert an einer Zentrifugalpumpe,
- Fig. 8:: eine perspektivische Darstellung eines dritten Ausführungsbeispiels einer Vorrichtung zum Wechseln der Pumpeneinheit einer Zentrifugalpumpe, wobei die Pumpeneinheit vom Stator getrennt ist,
- Fig. 9:: wie Fig. 8, jedoch nach einer ersten Phase des Einsetzens der Pumpeneinheit in den Stator,
- Fig. 10:: wie Fig. 9, jedoch nach Beendigung des Einsetzens der Pumpeneinheit in den Stator,
- Fig. 11:: eine perspektivische Explosionsdarstellung einer Variante des dritten Ausführungsbeispiels,
- Fig. 12:: eine perspektivische Darstellung der Variante aus Fig. 11,
- Fig. 13:: eine perspektivische Darstellung eines vierten Ausführungsbeispiels einer Vorrichtung zum Wechseln der Pumpeneinheit einer Zentrifugalpumpe, und
- Fig. 14-17:: jeweils eine perspektivische Darstellung des vierten Ausführungsbeispiels in verschiedenen Phasen des Einsetzens der Pumpeneinheit.

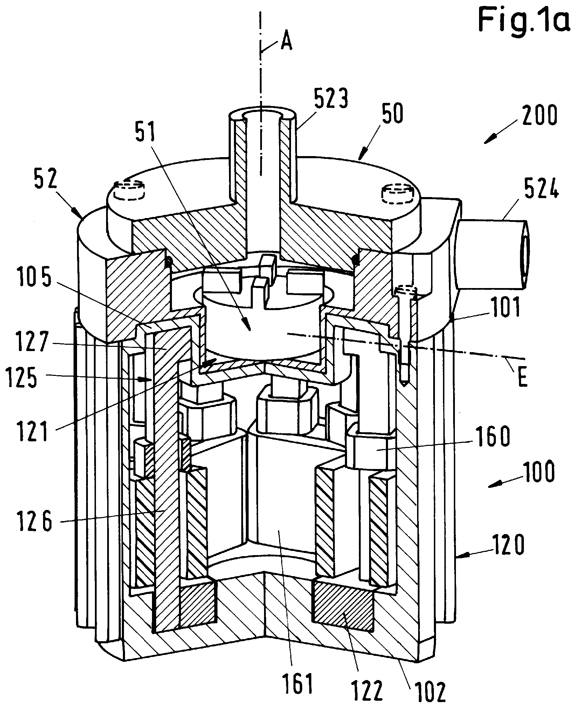

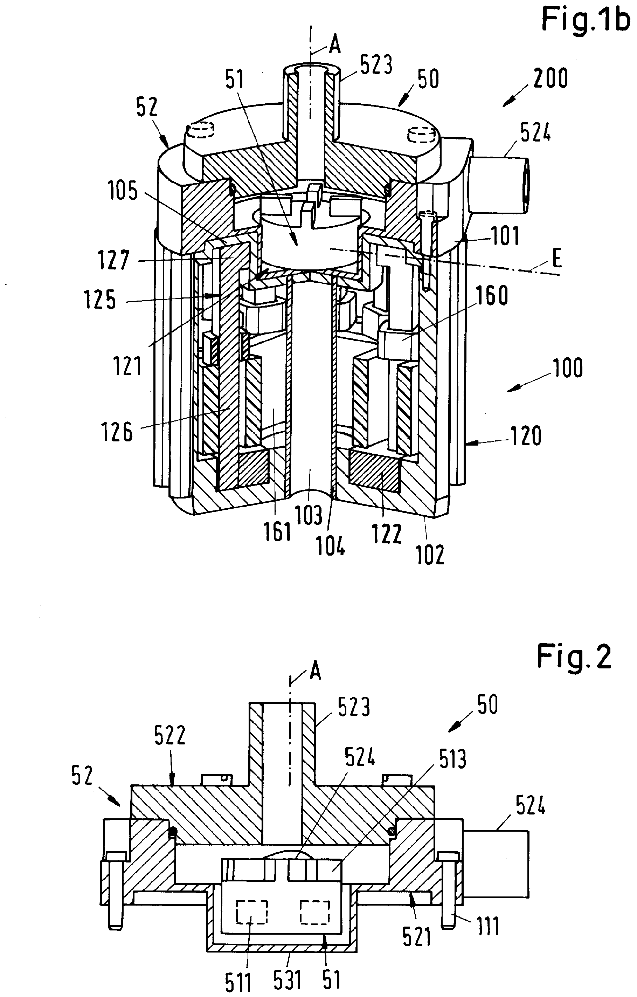

Durch die Erfindung wird eine Vorrichtung zum Wechseln einer Pumpeneinheit einer Zentrifugalpumpe vorgeschlagen Zum besseren Verständnis wird zunächst anhand der Fig. 1a, der Fig. 1b und der Fig. 2 eine Ausgestaltung einer Zentrifugalpumpe erläutert, für welche die erfindungsgemässe Vorrichtung geeignet ist.

Fig. 1a zeigt in einer perspektivischen Darstellung, teilweise im Schnitt, eine an sich bekannte Ausführungsform einer Zentrifugalpumpe, die gesamthaft mit dem Bezugszeichen 200 bezeichnet ist. Fig. 1b zeigt in einer zu Fig. 1a analogen Darstellung eine Variante der Zentrifugalpumpe 200. Die Zentrifugalpumpe 200 umfasst eine Pumpeneinheit 50 und einen Stator 100, der sich in einer axialen Richtung A von einem ersten axialen Ende 101 bis zu einem zweiten axialen Ende 102 erstreckt. Der Stator 100 umfasst ferner ein Statorgehäuse 120, das vorzugsweise als hermetisch dichtes Statorgehäuse 120 ausgestaltet ist, und die anderen Komponenten des Stators 100 hermetisch dichtend umschliesst. An dem ersten axialen Ende 101 des Stators 100 ist eine becherförmige Ausnehmung 121 vorgesehen, in welche die Pumpeneinheit 50 einsetzbar ist.

Fig. 2 zeigt eine Schnittdarstellung der Pumpeneinheit 50 der Zentrifugalpumpe 200 aus Fig. 1a oder Fig. 1b. In der Pumpeneinheit 50 ist ein Rotor 51 angeordnet, welcher das Flügelrad bzw. das Laufrad bildet, mit dem das Fluid gefördert wird. Wenn die Pumpeneinheit 50 in die becherförmige Ausnehmung 121 des Stators 100 eingesetzt ist, bildet der Stator 100 mit dem Rotor 51 einen elektromagnetischen Drehantrieb zum Rotieren des Rotors 51 um die axiale Richtung A. Der Stator 100 ist zur berührungslosen magnetischen Lagerung des Rotors 51, vorzugsweise nach dem Prinzip des lagerlosen Motors, ausgestaltet. Hierzu ist der Stator 100 als Lager- und Antriebsstator ausgestaltet, mit welchem der Rotor 51 berührungslos magnetisch zur Rotation um die axiale Richtung A antreibbar und berührungslos magnetisch bezüglich des Stators 100 lagerbar ist, wobei der Rotor 51 bezüglich der axialen Richtung A passiv magnetisch stabilisiert ist, und in einer zur axialen Richtung A senkrechten radialen Ebene, die in Fig. 1a und Fig. 1b durch die Linie E angedeutet ist, aktiv magnetisch gelagert ist.

Mit dem Begriff lagerloser Motor ist dabei ein elektromagnetischer Drehantrieb gemeint, bei welchem der Rotor 51 vollkommen magnetisch bezüglich des Stators 100 lagerbar ist, wobei keine separaten magnetischen Lager vorgesehen sind. Der Stator 100 ist dazu als Lager- und Antriebsstator ausgestaltet, der sowohl Stator 100 des elektrischen Antriebs als auch Stator 100 der magnetischen Lagerung ist. Mit den elektrischen Wicklungen des Stators 100 lässt sich ein magnetisches Drehfeld erzeugen, welches zum einen ein Drehmoment auf den Rotor 51 ausübt, das dessen Rotation um eine durch die axiale Richtung A definierte Solldrehachse bewirkt, und welches zum anderen eine beliebig einstellbare Querkraft auf den Rotor 51 ausübt, sodass dessen radiale Position in der radialen Ebene E aktiv steuerbar bzw. regelbar ist. Somit sind drei Freiheitsgrade des Rotors 51 aktiv regelbar, nämlich seine Rotation sowie seine radiale Position (zwei Freiheitsgrade). Bezüglich dreier weiterer Freiheitsgrade, nämlich seiner Position in axialer Richtung A und Verkippungen bezüglich der zur Solldrehachse senkrechten radialen Ebene E (zwei Freiheitsgrade), ist der Rotor 51 passiv magnetisch, das heisst nicht ansteuerbar, durch Reluktanzkräfte gelagert bzw. stabilisiert. Das Nichtvorhandensein eines separaten magnetischen Lagers bei vollständiger magnetischer Lagerung des Rotors 51 ist die Eigenschaft, welcher der lagerlose Motor seinen Namen verdankt. In dem Lager- und Antriebsstator 100 lässt sich die Lagerfunktion nicht von der Antriebsfunktion separieren.

Vorzugsweise ist der elektromagnetische Drehantrieb mit dem Stator 100 und dem Rotor 51 als sogenannter Tempelmotor ausgestaltet. Der Stator 100 umfasst eine Mehrzahl von Spulenkernen 125, hier acht Spulenkerne 125, von denen jeder einen Längsschenkel 126 umfasst, welcher sich von einem ersten Ende, in Fig. 1a und Fig. 1b das darstellungsgemäss untere Ende, in axialer Richtung A bis zu einem zweiten Ende erstreckt, sowie einen Querschenkel 127, welcher an dem zweiten Ende des Längsschenkels 126 und in der radialen Ebene E angeordnet ist. Jeder Querschenkel 127 erstreckt sich von dem zugehörigen Längsschenkel 126 in radialer Richtung auf den Rotor 51 bzw. die becherförmige Ausnehmung 121 zu und wird durch eine radial innenliegende Stirnfläche begrenzt. Die Spulenkerne 126 sind bezüglich der Umfangsrichtung um die becherförmige Ausnehmung 121 herum angeordnet, sodass der Rotor 51 zwischen den radial innenliegenden Stirnflächen der Querschenkel 127 der Spulenkerne 126 angeordnet ist.

Alle ersten Enden der Längsschenkel 126 sind durch einen Rückschluss 122 zur Führung des magnetischen Flusses miteinander verbunden. An jedem Längsschenkel 126 ist mindestens eine konzentrierte Wicklung 160, 161 vorgesehen, welche den jeweiligen Längsschenkel 126 umgibt. Bezüglich Anzahl und Anordnung der konzentrierten Wicklungen 160, 161 sind zahlreiche Varianten bekannt, die hier nicht näher erläutert werden. Es gibt beispielsweise solche Wicklungen 160, die um genau einen Längsschenkel 126 herum gewickelt sind, und solche Wicklungen 161, die um genau zwei Längsschenkel 126 herum angeordnet sind.

Die Mehrzahl der Längsschenkel 126, die sich in axialer Richtung A erstrecken und an die Säulen eines Tempels erinnern, hat dem Tempelmotor seinen Namen gegeben.

Bei der in Fig. 1b dargestellte Variante hat der Stator 100 eine zentral angeordnete Öffnung 103, die sich von dem zweiten axialen Ende 102 des Stators 100 in axialer Richtung A bis in die becherförmige Ausnehmung 121 erstreckt. Die zentral angeordnete Öffnung 103 ist zylindrisch ausgestaltet und durchstösst den Boden der becherförmigen Ausnehmung 121. Die zentral angeordnete Ausnehmung 121 erstreckt sich somit in axialer Richtung A durch den gesamten Stator 100 von dem ersten axialen Ende 101 bis zu dem zweiten axiale Ende 102. Die zentral angeordnete Öffnung 103 wird bezüglich der radialen Richtung durch eine innere Wandung 104 begrenzt. Vorzugsweise ist die innere Wandung 104 als hermetisch dichte Wandung 104 ausgestaltet, sodass die im Stator 100 angeordneten Komponenten wie z.B. die Spulenkerne 125 mit den darauf angeordneten konzentrierten Wicklungen 160, 161 hermetisch dicht umschlossen sind.

Bei der in Fig. 1a dargestellten Ausführungsform ist die zentral angeordnete Öffnung 103 nicht vorhanden.

Die Pumpeneinheit 50 umfasst ein Pumpengehäuse 52 mit einem Einlass 523 und mit einem Auslass 524 für das Fluid, sowie den in dem Pumpengehäuse 52 angeordneten Rotor 51 zum Fördern des Fluids, der um die axiale Richtung A rotierbar ist. Der Rotor 51 umfasst einen magnetisch wirksamen Kern 511, welcher für die Drehmomentbildung sowie für die Erzeugung der magnetischen Lagerkräfte magnetisch mit dem Stator 100 zusammenwirkt. Der magnetisch wirksame Kern 511 ist beispielsweise ein permanentmagnetischer Ring oder eine permanentmagnetische Scheibe.

Das Pumpengehäuse 52 ist vorzugsweise aus einem Kunststoff gefertigt, beispielsweise aus Polypropylen (PP), Polyethylen (PE), Polytetrafluoroethylen (PTFE) oder einem Perfluoralkoxy-Polymer. Es sind natürlich auch Ausgestaltungen möglich, bei denen das Pumpengehäuse 52 aus einem metallischen Material, beispielsweise aus einem Edelstahl, gefertigt ist.

Insbesondere kann die Pumpeneinheit 50 auch für den Einmalgebrauch, also als Einmalteil ausgestaltet sein. Mit dem Begriff "Einmalteil" und anderen Zusammensetzungen mit dem Bestandteil "Einmal", wie z. B. Einmalkomponente, Einmalvorrichtung usw., sind dabei solche Vorrichtungen, Komponenten bzw. Teile gemeint, die für den Einmalgebrauch ausgestaltet sind, die also bestimmungsgemäss nur ein einziges Mal benutzt werden können und dann entsorgt werden. Für eine neue Anwendung muss dann ein neues, bisher unbenutztes Einmalteil eingesetzt werden. Bei der Konzipierung bzw. der Ausgestaltung der Pumpeneinheit 50 als Einmalteil ist es ein wesentlicher Aspekt, dass die Pumpeneinheit in möglichst einfacher Weise mit dem wiederverwendbaren Stator 100 zusammenfügbar oder von dem Stator 100 trennbar ist. Die Pumpeneinheit 50 soll also in sehr einfacher Weise ersetzt werden können, ohne dass dafür ein hoher Montageaufwand notwendig ist.

Es sind auch solche Ausgestaltungen möglich, bei denen der magnetisch wirksame Kern 511 permanentmagnetfrei, also ohne Permanentmagnete ausgestaltet ist. Der Rotor 51 ist dann z.B. als Reluktanzläufer ausgestaltet. Der magnetisch wirksame Kern 511 des Rotors 51 besteht dann beispielsweise aus einem weichmagnetischen Material. Geeignete weichmagnetische Materialien für den magnetisch wirksamen Kern 511 sind beispielsweise ferromagnetische oder ferrimagnetische Materialien, also insbesondere Eisen, Nickel-Eisen, Kobalt-Eisen, Silizium-Eisen, Mu-Metall.

Ferner sind Ausgestaltungen möglich, bei denen der magnetisch wirksame Kern 511 des Rotors 51 sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Typischerweise ist der magnetisch wirksame Kern 511 mit einem Kunststoff vollständig ummantelt. In anderen Ausführungsformen ist der magnetisch wirksame Kern 511 vollständig in einer Ummantelung eingeschlossen, die aus einem keramischen Material oder aus einem metallischen Material, beispielsweise rostfreier Stahl oder Titan oder Tantal, besteht.

Der Rotor 51 umfasst ferner eine Mehrzahl von Flügeln 513 zum Fördern des Fluids vom Einlass 523 zum Auslass 524. Die Flügel 513 sind auf der Kunststoffummantelung bzw. auf der Ummantelung des magnetisch wirksamen Kerns 511 angeordnet. Die Flügel 513 bestehen vorzugsweise aus Kunststoff und können beispielsweise einstückig mit der Kunststoffummantelung ausgestaltet sein. Natürlich ist es auch möglich, die individuellen Flügel 513 oder die Gesamtheit der Flügel 513 in einem separaten Fertigungsprozess herzustellen und sie dann mit der Kunststoffummantelung des magnetisch wirksamen Kerns 511 zu verbinden, beispielsweise mittels eines Schweissprozesses.

Das von dem Rotor 51 gebildete Laufrad mit den Flügeln 513 ist vorzugsweise als radiales Laufrad ausgestaltet, welches von dem Fluid vom Einlass 523 in axialer Richtung A angeströmt wird, und das Fluid dann in eine radiale Richtung umlenkt.

Das Pumpengehäuse 52 umfasst ein Bodenteil 521 und einen Deckel 522 zum Verschliessen des Bodenteils 521. Das Bodenteil 521 des Pumpengehäuses 52 weist einen Becher 531 zur Aufnahme des Rotors 51 auf. Der Becher 531 wird in die becherförmige Ausnehmung 121 im Stator 100 eingesetzt, sodass der Rotor 51 genauer gesagt der magnetisch wirksame Kern 511 des Rotors 51 zwischen den Querschenkeln 127 der Spulenkerne 125 angeordnet ist.

Die Pumpeneinheit 50 ist beispielsweise mittels einer Mehrzahl von Schrauben 111 am Statorgehäuse 120 befestigt. In anderen Ausgestaltungen ist die Pumpeneinheit 50 mittels einer Bajonettverbindung am Stator 100 fixiert. Insbesondere bei Ausgestaltungen der Pumpeneinheit 50 als Einmalteil ermöglicht die Bajonettverbindung ein rasches Auswechseln der Pumpeneinheit 50. Üblicherweise ist die Bajonettverbindung durch eine Pinverrieglung gesichert.

Insbesondere, wenn die Zentrifugalpumpe 200 für sehr grosse Leistungen ausgelegt ist, beispielsweise für eine Leistung von vier Kilowatt oder mehr, werden sehr grosse bzw. sehr starke Magnete beispielsweise Permanentmagnete im Rotor 51 und/oder im Stator 100 eingesetzt. Hieraus resultieren enorme magnetische Kräfte, sodass das Wechseln der Pumpeneinheit 50 sehr schwierig wird. Es besteht ein erhebliches Risiko, dass sich beim Auswechseln der Pumpeneinheit 50 das Bedienpersonal verletzt oder die Pumpeneinheit 50 oder auch der Stator 100 beschädigt werden.

Wenn der Rotor 51 in axialer Richtung A passiv magnetisch gelagert ist, wirken typischerweise die passiv magnetischen Kräfte auch dann, wenn der Stator 100 stromfrei ist, also wenn die Wicklungen 160, 161 des Stators 100 nicht mit Strom beaufschlagt werden. Diese passiv magnetischen Kräfte, die zwischen dem Rotor 51 und dem Stator 100 wirken, müssen für das Wechseln der Pumpeneinheit 50 überwunden werden

Erfindungsgemäss wird daher eine Vorrichtung zum Wechseln der Pumpeneinheit 50 einer Zentrifugalpumpe 200 vorgeschlagen. Diese Vorrichtung wird gesamthaft mit dem Bezugszeichen 1 bezeichnet.

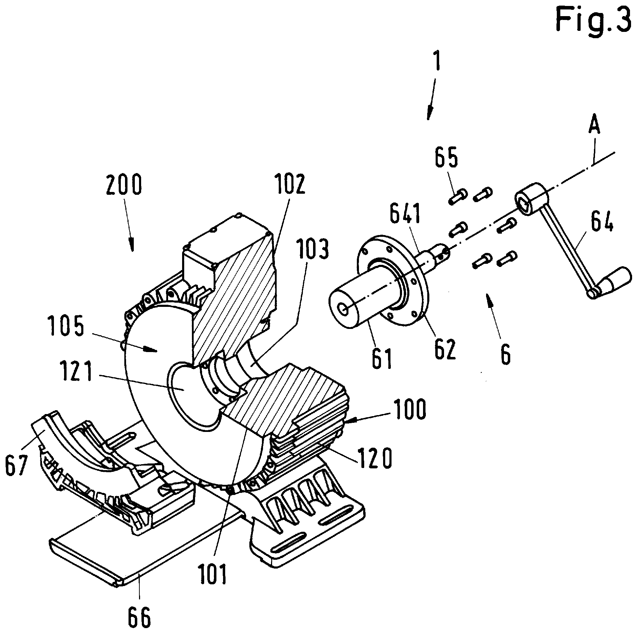

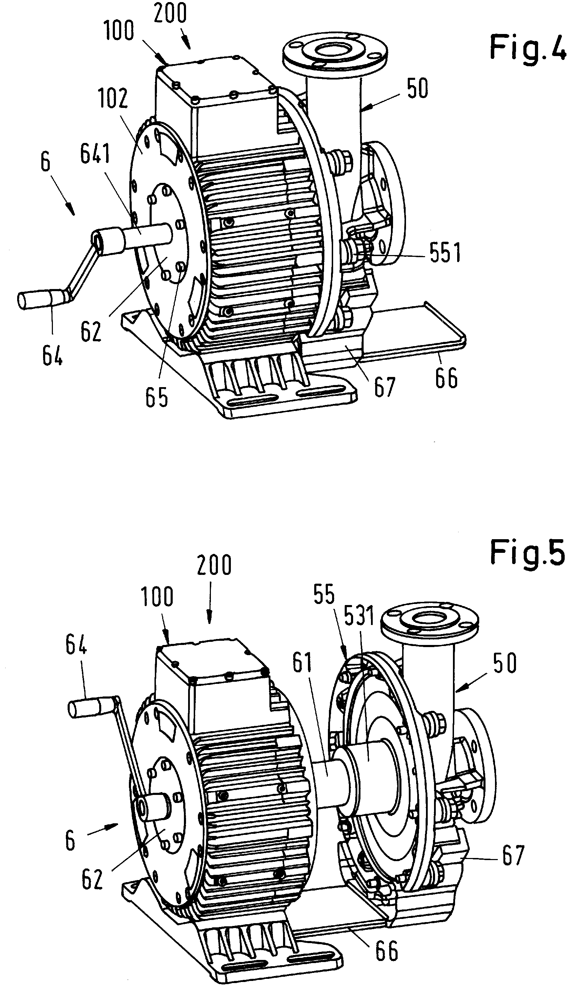

Fig. 3 zeigt eine perspektivische Explosionsdarstellung eines ersten Ausführungsbeispiels der Vorrichtung 1 zum Wechseln der Pumpeneinheit 50 einer Zentrifugalpumpe 200. Die Darstellung in Fig. 3 ist teilweise im Schnitt. Fig. 4 zeigt eine perspektivische Darstellung des ersten Ausführungsbeispiels der Vorrichtung 1, wobei die Vorrichtung 1 an der Zentrifugalpumpe 200 fixiert ist. In einer zu Fig. 4 analogen Einstellung zeigt Fig. 5 die Vorrichtung 1 beim Wechseln der Pumpeneinheit 50.

Die Vorrichtung 1 umfasst eine Betätigungseinrichtung 6, mit welcher eine mechanische Kraft auf die Pumpeneinheit 50 ausübbar ist. Diese mechanische Kraft wirkt in axialer Richtung A und ist so gerichtet, dass sie die Pumpeneinheit 50 in axialer Richtung von dem Stator 100 trennt. Die Vorrichtung 1 ist am Stator 100 fixierbar.

Bei dem ersten Ausführungsbeispiel umfasst die Betätigungsvorrichtung 6 einen Kolben 61, der vorzugsweise zylindrisch ausgestaltet ist, eine Fixierungsplatte 62 und eine Kurbel 64, die als Gewindekurbel mit einer Gewindestange 641 ausgestaltet ist. Der Kolben 61 ist drehfest mit der Gewindestange 641 verbunden. Beispielsweise können der Kolben 61 und die Gewindestange 641 auch einstückig ausgestaltet sein. Die Fixierungsplatte 62 ist mit einem Innengewinde versehen, welches zum Zusammenwirken mit der Gewindestange 641 ausgestaltet ist. Der Kolben 61 ist auf der einen Seite der Fixierungsplatte 62 angeordnet, und die Gewindestange 641 ragt auf der anderen Seite der Fixierungsplatte 62 heraus, sodass die Gewindestange 641 durch Drehen der Kurbel 64 den Kolben 61 relativ zur Fixierungsplatte 62 geradlinig verschiebt.

Wie dies insbesondere in Fig. 3 zu erkennen ist, hat der Stator 100 die zentral angeordnete Öffnung 103, die sich von dem zweiten axialen Ende 102 des Stators 100 in axialer Richtung A bis in die becherförmige Ausnehmung 121 erstreckt. Die zentral angeordnete Öffnung 103 ist zylindrisch ausgestaltet und so bemessen, dass der Kolben 61 in die zentral angeordnete Öffnung 103 einführbar und in der Öffnung 103 in axialer Richtung A hin und her bewegbar ist.

Der Kolben 61 wird vom zweiten axialen Ende 102 des Stators 200 her in die zentral angeordnete Öffnung 103 eingeführt. Anschliessend wird die Fixierungsplatte 62 mittels mehrerer Schrauben 65 am zweiten axialen Ende 102 des Stators befestigt, sodass die Fixierungsplatte 62 am Stator 100 fixiert ist. Durch Betätigen der Kurbel 64 lässt sich nun der Kolben 61 in der zentral angeordneten Öffnung 103 in axialer Richtung A hin und her bewegen.

Durch Verschieben des Kolbens 61 in Richtung des ersten axialen Endes 101 des Stators 100 lässt sich nun die mechanische Kraft erzeugen, welche die Pumpeneinheit 50 aus dem Stator 100 herausschiebt (siehe Fig. 5)

Bei der in den Fig. 4 und Fig. 5 dargestellten Zentrifugalpumpe 200 umfasst der Stator 100 einen Spalttopf 105, in dem die becherförmigen Ausnehmung 121 angeordnet ist, in welche die Pumpeneinheit 50 einsetzbar ist. Der Spalttopf 105 bildet das erste axiale Ende 101 des Stators 100. Der Spalttopf 105 ist fest mit dem Statorgehäuse 120 verbunden, beispielsweise mittels einer formschlüssigen Verbindung und/oder mittels einer elastischen Dichtung. Natürlich kann der Spalttopf 105 auch mittels Schrauben am Statorgehäuse 120 befestigt sein.

Die Pumpeneinheit 50 umfasst einen Befestigungsring 55, welcher sich um den Becher 531 des Pumpengehäuses 52 herum erstreckt und fest mit dem Pumpengehäuse 52 verbunden ist. Der Befestigungsring 55 dient dazu, die Pumpeneinheit 50 an dem Stator 100 zu befestigen, beispielsweise mittels Schrauben 551.

Bei der in den Fig. 4 und Fig. 5 dargestellten Ausführungsform wird zum Wechseln der Pumpeneinheit 50 diese in axialer Richtung A aus dem Stator 100 herausgedrückt, das heisst die mechanische Kraft wird auf den Becher 531 ausgeübt, sodass dieser und damit die gesamte Pumpeneinheit 50 aus dem Stator 100 herausgeschoben wird.

Fig. 4 zeigt die Zentrifugalpumpe 200 im betriebsbereiten Zustand, in welchem die Pumpeneinheit 50 in der becherförmigen Ausnehmung 121 des Stators 100 angeordnet ist. In Fig. 4 ist deutlich zu erkennen, dass die Gewindestange 641 aus dem zweiten axialen Ende 102 des Stators 100 herausragt. Soll nun die Pumpeneinheit 50 vom Stator 100 getrennt werden, beispielsweise weil die Pumpeneinheit 50 durch eine neue Pumpeneinheit 50 ersetzt werden soll, so wird die Kurbel 64 betätigt, sodass der Kolben 61 in der zentral angeordneten Öffnung 103 in Richtung des ersten axialen Endes 101 des Stators 100 verschoben wird. Da sich die zentral angeordnete Öffnung 103 bis in die becherförmige Ausnehmung 121 erstreckt, ist in dem Boden der becherförmigen Ausnehmung 121 ein Durchlass vorgesehen, sodass sich der Kolben 61 durch den Boden der becherförmigen Ausnehmung 121 hindurch bewegen kann und dann direkt auf den Becher 531 des Pumpengehäuses 52 der Pumpeneinheit 50 drückt. Sobald der Kolben 61 an dem Becher 531 des Pumpengehäuses 52 anliegt, wird die Pumpeneinheit 50 bei weiterer Betätigung der Kurbel 64 aus dem Stator 100 herausgeschoben. Fig. 5 zeigt die Zentrifugalpumpe 200 in einer Endposition, in welcher die Pumpeneinheit 50 vollständig aus dem Stator 100 herausgeschoben ist. In dieser Position kann die Pumpeneinheit 50 sehr einfach entfernt bzw. ausgetauscht werden, weil - wenn überhaupt - nur noch sehr schwache magnetische Kräfte zwischen dem Rotor 51 und dem Stator 100 wirken. In Fig. 5 ist auch zu erkennen, dass die Gewindestange 641 nun deutlich weiter in den Stator 100 hinein bewegt worden ist.

Optional umfasst die Vorrichtung 1 zum Wechseln der Pumpeneinheit 50 eine Führungsschiene 66, die fest am Stator 100 fixierbar ist oder fest am Stator 100 fixiert ist, und die sich vom ersten Ende 101 des Stators 100 in axialer Richtung A vom Stator 100 weg erstreckt. Auf dieser Führungsschiene 66 ist ein Stützelement 67 angeordnet, welches sich auf der Führungsschiene 66 abstützt, und welches auf der Führungsschiene 66 in axialer Richtung A hin und her bewegbar ist. Das Stützelement 67 ist so ausgestaltet, dass es die Pumpeneinheit 50 stützt, wenn die Pumpeneinheit 50 aus dem Stator 100 herausgeschoben wird. Beispielsweise kann das Stützelement 67 die Pumpeneinheit 50 teilweise umfassen, sodass die Pumpeneinheit 50 genau in axialer Richtung A aus dem Stator 100 herausgeschoben wird. Hierdurch kann es effizient verhindert werden, dass die Pumpeneinheit 50 insbesondere beim Herausschieben aus dem Stator 100 durch die starken magnetischen Kräfte verzogen oder verkippt wird.

Es sind natürlich auch solche Ausgestaltungen möglich, bei welchen die Bewegung des Kolbens 61 in der zentral angeordneten Öffnung 103 motorisch erfolgt. Hierzu kann beispielsweise anstelle der Kurbel 64 ein Spindelmotor vorgesehen sein, welcher den Kolben 61 in der zentral angeordneten Öffnung 103 bewegt.

Die Vorrichtung 1 kann permanent an der Zentrifugalpumpe 200 bzw. am Stator 100 montiert sein, also beispielsweise auch während des Betriebs der Zentrifugalpumpe 200.

Alternativ ist es auch möglich, dass die Vorrichtung 1 nur bei Bedarf, d.h. zum Wechseln der Pumpeneinheit 50, am Stator 100 fixiert wird, und nach dem Wechseln der Pumpeneinheit 50 wieder vom Stator 100 abmontiert wird. Ferner ist es möglich, dass einige Komponenten der Vorrichtung 1 permanent am Stator 100 fixiert sind, während andere Komponenten der Vorrichtung 1 nur zum Wechseln der Pumpeneinheit am Stator 100 fixiert werden.

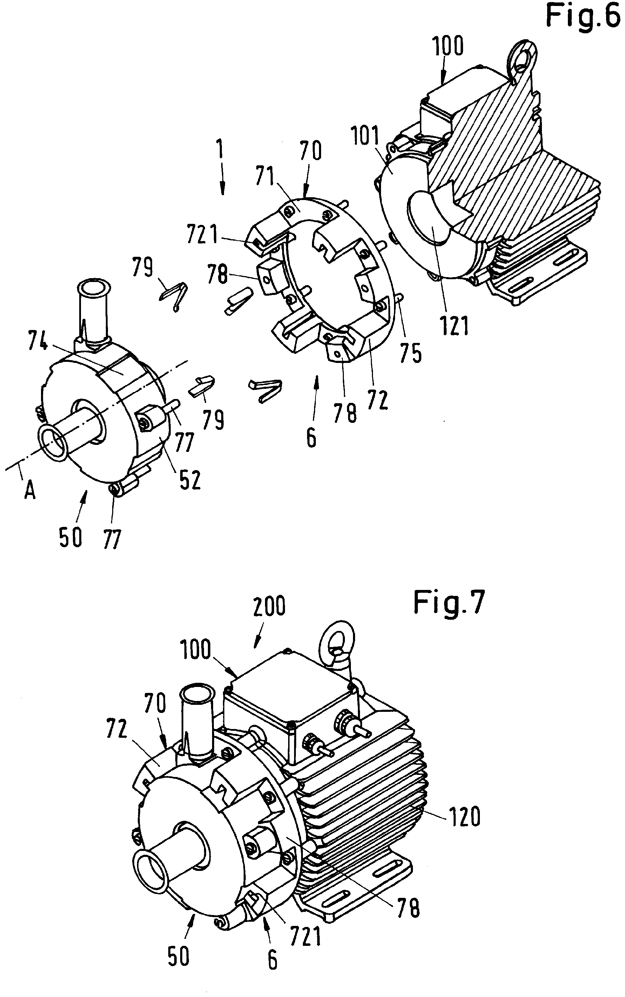

Fig. 6 zeigt eine perspektivische Explosionsdarstellung eines zweiten Ausführungsbeispiels einer erfindungsgemässen Vorrichtung 1 zum Wechseln der Pumpeneinheit 50, wobei die Darstellung teilweise im Schnitt ist. Zum besseren Verständnis zeigt Fig. 7 noch eine perspektivische Darstellung des zweiten Ausführungsbeispiels, fixiert an einer Zentrifugalpumpe 200.

Im Folgenden wird nur auf die Unterschiede zu dem ersten Ausführungsbeispiel eingegangen. Gleiche Teile oder von der Funktion her gleichwertige Teile des zweiten Ausführungsbeispiels sind mit den gleichen Bezugszeichen bezeichnet wie bei dem ersten Ausführungsbeispiel. Insbesondere haben die Bezugszeichen die gleiche Bedeutung wie sie bereits im Zusammenhang mit dem ersten Ausführungsbeispiel erläutert sind. Es versteht sich, dass alle vorangehenden Erläuterungen des ersten Ausführungsbeispiels in gleicher Weise oder in sinngemäss gleicher Weise auch für das zweite Ausführungsbeispiel gelten.

Bei dem zweiten Ausführungsbeispiel ist die Betätigungseinrichtung 6 so ausgestaltet, dass die mechanische Kraft an einem Bereich des Pumpengehäuses 52 angreift, welcher ausserhalb der becherförmigen Ausnehmung 121 des Stators 100 angeordnet ist. Da bei dem zweiten Ausführungsbeispiel die mechanische Kraft nicht unmittelbar auf die becherförmige Ausnehmung 121 bzw. den Becher 531 des Pumpengehäuses 52 einwirkt, bedarf es für das zweite Ausführungsbeispiel auch nicht der zentral angeordneten Öffnung 103 im Stator 100.

Bei dem zweiten Ausführungsbeispiel umfasst die Betätigungsvorrichtung 6 eine Montageeinrichtung 70, die an dem ersten axialen Ende 101 des Stators 100 fixierbar ist, beispielsweise mittels einer Mehrzahl von Befestigungsschrauben 75. Die Montageeinrichtung 70 umfasst einen ringförmigen Sockel 71, welcher so ausgestaltet ist, dass er das Pumpengehäuse 52 und insbesondere den Becher 531 des Pumpengehäuses 52 umfassen kann. Der ringförmige Sockel 71 wird mit den Befestigungsschrauben 75 auf dem ersten axialen Ende 101 des Stators 100 befestigt, sodass er um die becherförmige Ausnehmung 121 herum angeordnet ist. Der Becher 531 des Pumpengehäuses 52 kann dann durch den ringförmigen Sockel 71 hindurch in die becherförmige Ausnehmung 121 eingesetzt bzw. aus dieser herausgenommen werden.

Auf dem ringförmigen Sockel 71 sind mehrere, hier vier, Führungselemente 72 vorgesehen, von denen sich jedes vom ringförmigen Sockel 71 in axialer Richtung A vom Stator 100 weg erstreckt. Jedes Führungselement 72 ist hier stabförmig ausgestaltet. Die Führungselemente 72 sind so angeordnet, dass das Pumpengehäuse 52 der Pumpeneinheit 50 in axialer Richtung A zwischen den Führungselementen 72 geführt wird. Optional kann an dem Pumpengehäuse 52 für jedes Führungselement 72 eine sich jeweils in axialer Richtung A erstreckende Nut 74 vorgesehen sein, in welche das jeweilige Führungselement 72 eingreift. Hierdurch lässt sich ein Verdrehen des Pumpengehäuses 52 relativ zu der Montageeinrichtung 70 wirkungsvoll vermeiden.

Ferner sind am Pumpengehäuse 52 mehrere Befestigungselemente 77 vorgesehen, mit welchen das Pumpengehäuse 52 an der Montageeinrichtung 70 fixiert werden kann. Die Befestigungselemente 77 sind beispielsweise als Fixierschrauben 77 ausgestaltet, die am Pumpengehäuse 52 angeordnet sind. Für jede Befestigungsschraube 77 ist auf dem ringförmigen Sockel 71 jeweils ein Innengewindestück 78 vorgesehen, in welches die jeweilige Fixierschraube 77 eingreift. Auf diese Weise lässt sich die Pumpeneinheit 50 zuverlässig an der Montageeinrichtung 70 befestigen.

Die Montageeinrichtung 70 umfasst mehrere elastische Elemente 79, die so angeordnet sind, dass sie in axialer Richtung A gespannt sind, wenn die Pumpeneinheit 50 im Stator 100 fixiert ist. Das heisst, beim Einführen der Pumpeneinheit 50 in die becherförmige Ausnehmung 121 und beim Festziehen der Fixierschrauben 77 werden die elastischen Elemente 79 gespannt. Die Pumpeneinheit 50 wird also gegen die elastische Kraft der elastischen Elemente 79 in die becherförmige Ausnehmung 121 eingesetzt. Den eingesetzten Zustand der Pumpeneinheit zeigt Fig. 7.

Soll nun die Pumpeneinheit 50 gewechselt werden, so werden die Fixierschrauben 77 gelöst und die gespannten elastischen Elemente 79 schieben mit ihrer elastischen Kraft die Pumpeneinheit 50 in axialer Richtung A aus dem Stator 100 heraus.

Fig. 6 zeigt eine mögliche Ausgestaltung und Anordnung der elastischen Elemente 79. Jedes der Führungselemente 72 weist an seiner radial innenliegenden Seite eine Axialnut 721 auf, die sich in axialer Richtung A erstreckt. In jeder Axialnut 721 ist eine Klappfeder als elastisches Element 79 angeordnet. Wird nun die Pumpeneinheit 50 durch die Montageeinrichtung 70 hindurch in die becherförmige Ausnehmung 121 eingesetzt und mit den Fixierschrauben 77 befestigt, so werden dabei die Klappfedern in den Axialnuten 721 gespannt.

Werden zum Wechseln der Pumpeneinheit 50 die Fixierschrauben 77 gelöst, so wird die Pumpeneinheit 50 durch die in axialer Richtung A wirkende Federkraft der Klappfedern entlang der Führungselemente 72 aus dem Stator herausgeschoben.

Es sind natürlich noch viele andere Varianten der konkreten Ausgestaltung möglich. Ein wesentlicher Aspekt des zweiten Ausführungsbeispiels ist es, dass das Einsetzen der Pumpeneinheit 50 in den Stator 100 gegen die Kraft von elastischen Elementen 79, vorzugsweise gegen die Kraft von Federelementen, erfolgt, sodass diese elastischen Elemente 79 in axialer Richtung A gespannt sind, wenn die Pumpeneinheit 50 im Stator 100 fixiert ist.

Es können beispielsweise auch axiale Federn zwischen dem Pumpengehäuse 52 und der Montageeinrichtung 70 vorgesehen sein.

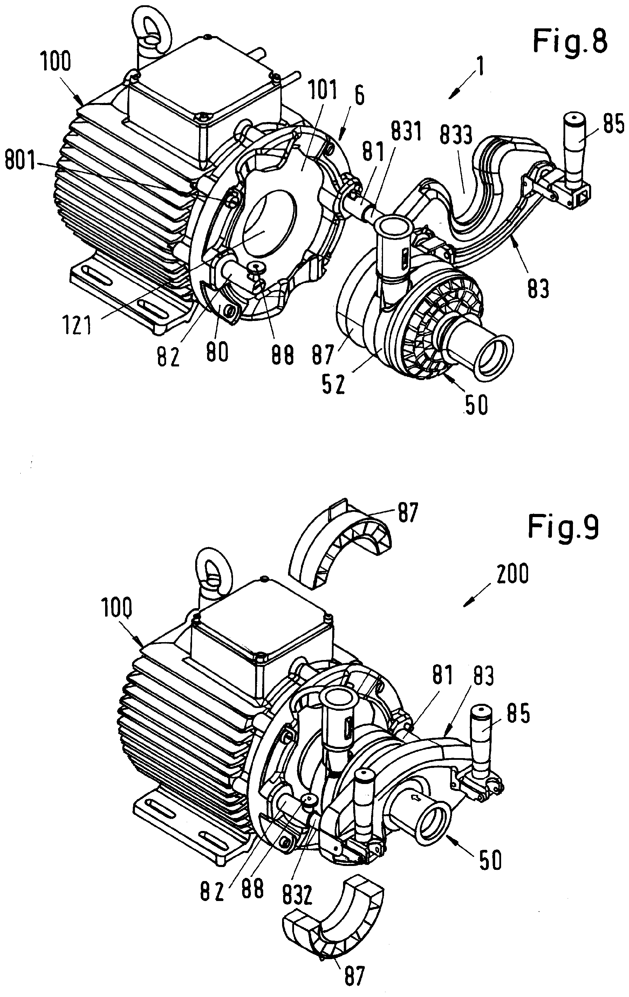

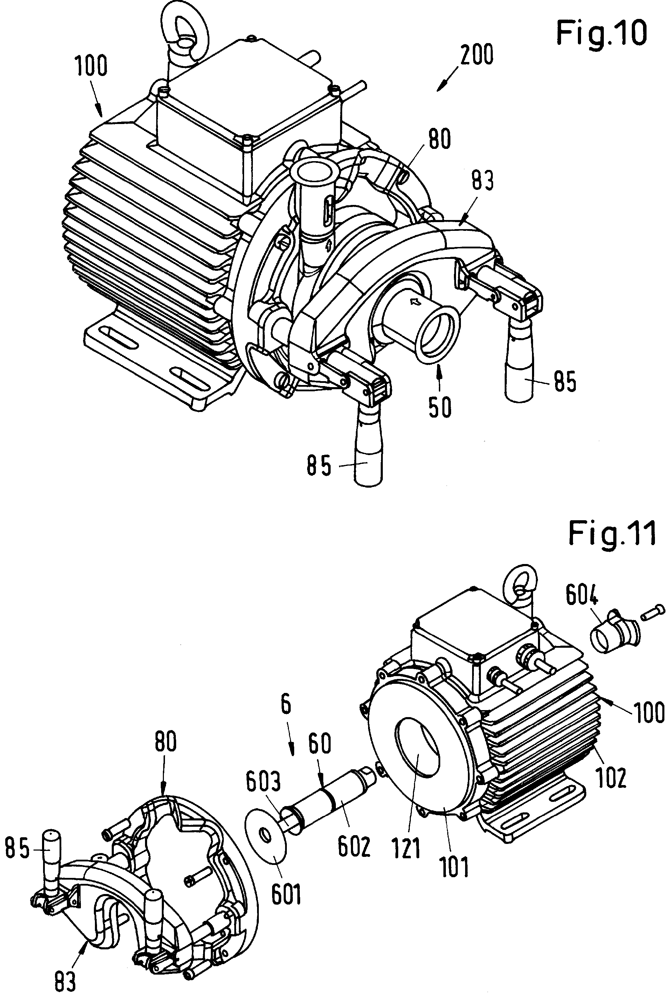

Fig. 8 zeigt eine perspektivische Darstellung eines dritten Ausführungsbeispiels einer Vorrichtung zum Wechseln der Pumpeneinheit 50 einer Zentrifugalpumpe 200, wobei die Pumpeneinheit 50 vom Stator getrennt ist. Fig. 9 zeigt das dritte Ausführungsbeispiel nach einer ersten Phase des Einsetzens der Pumpeneinheit 50 in den Stator 100. Fig. 10 zeigt das dritte Ausführungsbeispiel nach Beendigung des Einsetzens der Pumpeneinheit 50 in den Stator 100.

Im Folgenden wird nur auf die Unterschiede zu dem ersten und dem zweiten Ausführungsbeispiel eingegangen. Gleiche Teile oder von der Funktion her gleichwertige Teile des dritten Ausführungsbeispiels sind mit den gleichen Bezugszeichen bezeichnet wie bei dem ersten und zweiten Ausführungsbeispiel. Insbesondere haben die Bezugszeichen die gleiche Bedeutung wie sie bereits im Zusammenhang mit dem ersten und dem zweiten Ausführungsbeispiel erläutert sind. Es versteht sich, dass alle vorangehenden Erläuterungen des ersten und zweiten Ausführungsbeispiels in gleicher Weise oder in sinngemäss gleicher Weise auch für das dritte Ausführungsbeispiel gelten.

Bei dem dritten Ausführungsbeispiel erfolgt das Entfernen der Pumpeneinheit 50 aus dem Stator 100 und das Einsetzen der Pumpeneinheit 50 in den Stator 100 mittels einer Hebelkraft.

In Fig. 8 ist die Pumpeneinheit 50 getrennt von dem Stator 100 dargestellt. Die Betätigungseinrichtung 6 der Vorrichtung 1 umfasst bei dem dritten Ausführungsbeispiel einen Montagering 80, der an dem ersten axialen Ende 101 des Stators 100 fixierbar ist, beispielsweise mittels einer Mehrzahl von Schrauben 801. Der Montagering 80 ist so ausgestaltet, dass er das Pumpengehäuse 52 und insbesondere den Becher 531 des Pumpengehäuses 52 umfassen kann. Der Montagering 80 wird mit den Schrauben 801 auf dem ersten axialen Ende 101 des Stators 100 befestigt, sodass er um die becherförmige Ausnehmung 121 herum angeordnet ist. Der Becher 531 des Pumpengehäuses 52 kann dann durch den Montagering 80 hindurch in die becherförmige Ausnehmung 121 eingesetzt bzw. aus dieser herausgenommen werden.

Auf dem Montagering 80 sind eine erste Führungsstange 81 und eine zweite Führungsstange 82 angeordnet, die sich jeweils von dem Montagering 80 in axialer Richtung A vom Stator 100 weg erstrecken. Vorzugsweise sind die beiden Führungsstangen 81, 82 diametral angeordnet. An der ersten Führungsstange 81 ist eine schwenkbare Halteeinrichtung 83 zum Halten der Pumpeneinheit 50 vorgesehen. Die Halteeinrichtung 83 ist um die erste Führungsstange 81 schwenkbar. Hierzu hat die Halteeinrichtung 83 beispielsweise einen ersten Führungspin 831, der in die erste Führungsstange 81 eingreift und in der ersten Führungsstange 81 drehbar ist. Ferner ist der erste Führungspin 831 in der ersten Führungsstange 81 in axialer Richtung A verschiebbar.

Die Halteeinrichtung 83 umfasst ferner einen zweiten Führungspin 832 (Fig. 9), der vorzugsweise diametral zum ersten Führungspin 831 angeordnet ist. Ferner ist an der Halteeinrichtung 83 für jeden Führungspin 831, 832jeweils ein Spannhebel 85 vorgesehen, welcher zwischen einer Offenstellung (Fig. 9) und einer Schliessstellung (Fig. 10) hin und her bewegbar ist.

Fig. 8 zeigt die Halteeinrichtung 83 in einer ersten Stellung. Aus dieser ersten Stellung kann die Halteeinrichtung 83 um die erste Führungsstange 81 herum in eine Haltestellung geschwenkt werden, vorzugsweise um 180°. In Fig. 9 ist die Haltestellung dargestellt. In der Haltestellung liegt die Halteeinrichtung 83 an der zweiten Führungsstange 82 an. Der zweite Führungspin 832 fluchtet nun mit der zweiten Führungsstange 82, sodass der zweite Führungspin 832 bei einer Verschiebung des Halteeinrichtung 83 in axialer Richtung A in die zweite Führungsstange 82 eingreifen kann. Dies ist insbesondere in Fig. 9 zu erkennen.

Die Halteeinrichtung 83 hat ferner eine Halteöffnung 833, die so ausgestaltet ist, dass sie das Pumpengehäuse 52 der Pumpeneinheit 50 umfassen kann. Die Halteöffnung 833 ist an einer Seite offen, sodass die Halteeinrichtung 83 über die Pumpeneinheit 5 geschwenkt werden kann, sodass das Pumpengehäuse 52 in der Halteöffnung 833 der Halteeinrichtung 83 angeordnet ist. Das Pumpengehäuse 52 und die Halteöffnung 833 sind so ausgestaltet, dass das Pumpengehäuse 52 relativ zu der Halteeinrichtung 83 in axialer Richtung A nicht mehr verschiebbar ist, wenn das Pumpengehäuse 52 in der Halteöffnung 833 angeordnet ist.

Vorzugsweise ist an dem Pumpengehäuse 52 ein abnehmbarer Schutzmantel 87 vorgesehen, welches den Becher 531 des Pumpengehäuses 52 ringförmig umschliesst. Der Schutzmantel 87 hat einen Aussendurchmesser der grösser ist als der Innendurchmesser der becherförmigen Ausnehmung 121, sodass die Pumpeneinheit 50 nicht unbeabsichtigt in die becherförmige Ausnehmung 121 hineingezogen werden kann. Der Schutzmantel 87 ist vorzugsweise zweiteilig ausgestaltet, beispielsweise mit zwei Halbschalen (Fig. 9), sodass der Schutzmantel 87 in einfacher Weise von dem Becher 531 des Pumpengehäuses 52 entfernt werden kann.

Der Schutzbecher 87 verhindert nicht nur, dass die starken Magnetkräfte die Pumpeneinheit 52 gewaltsam in den Stator 100 hineinziehen, wobei die Pumpeneinheit 50 durch kräftiges Anstossen im Stator 100 beschädigt werden könnte, sondern der Schutzbecher 87 verhindert insbesondere auch bei permanentmagnetisch ausgestalteten Rotoren 51, dass der Becher 531 gegen das Anziehen ferromagnetischer Gegenstände geschützt ist.

Es versteht sich, dass der Schutzbecher 87 auch bei anderen Ausführungsbeispielen der erfindungsgemässen Vorrichtung 1 vorgesehen sein kann.

Im Folgenden wird anhand der Fig. 8 bis Fig. 10 das Einsetzen der Pumpeneinheit 50 in den Stator 100 beschrieben. Zunächst wird die Halteeinrichtung 83 in die in Fig. 8 gezeigte erste Stellung gebracht. Die Pumpeneinheit 50 mit dem Schutzbecher 87 wird in dem Montagering 80 angeordnet und liegt auf dem ersten Ende 101 des Stators 100 auf.

Nun wird die Halteeinrichtung 83 in die in Fig. 10 gezeigte Haltestellung gebracht, das heisst, die Halteeinrichtung 83 wird um die erste Führungsstange 81 herum und über die Pumpeneinheit 50 geschwenkt, sodass die Pumpeneinheit 50 in der Halteöffnung 833 der Halteeinrichtung 83 gehalten ist. Nun wird der Schutzbecher 87 entfernt. Durch Betätigen der Spannhebel 85, nämlich durch Kippen der Spannhebel 85 um 180° nach unten (gemäss der Darstellung in Fig. 9) wird die Pumpeneinheit 50 in axialer Richtung A in die becherförmige Ausnehmung im Stator 100 hineingeschoben.

Zum Trennen der Pumpeneinheit 50 von dem Stator 100 werden die Spannhebel 85 aus der Schliessstellung (Fig. 10) in die Offenstellung (Fig. 9) gebracht, wodurch die Pumpeneinheit 50 in axialer Richtung A aus der becherförmigen Ausnehmung 121 herausgezogen wird. Anschliessend wird die Halteeinrichtung 83 in die erste Stellung geschwenkt (Fig. 8) und die Pumpeneinheit 50 kann entnommen werden.

Vorzugsweise ist an der zweiten Führungsstange 82 ein Verriegelungselement 88 vorgesehen, mit welchem die Halteeinrichtung 83 an der ersten Führungsstange 81 fixierbar ist, wenn das Pumpenggehäuse 52 in der becherförmigen Ausnehmung 121 angeordnet ist. Das Verrieglungselement 88 ist beispielsweise als Verriegelungspin mit Schnappfunktion ausgestaltet, welcher in ein Loch in dem zweiten Führungspin 832 eingreift, wenn das Pumpenggehäuse 52 in der becherförmigen Ausnehmung 121 angeordnet ist

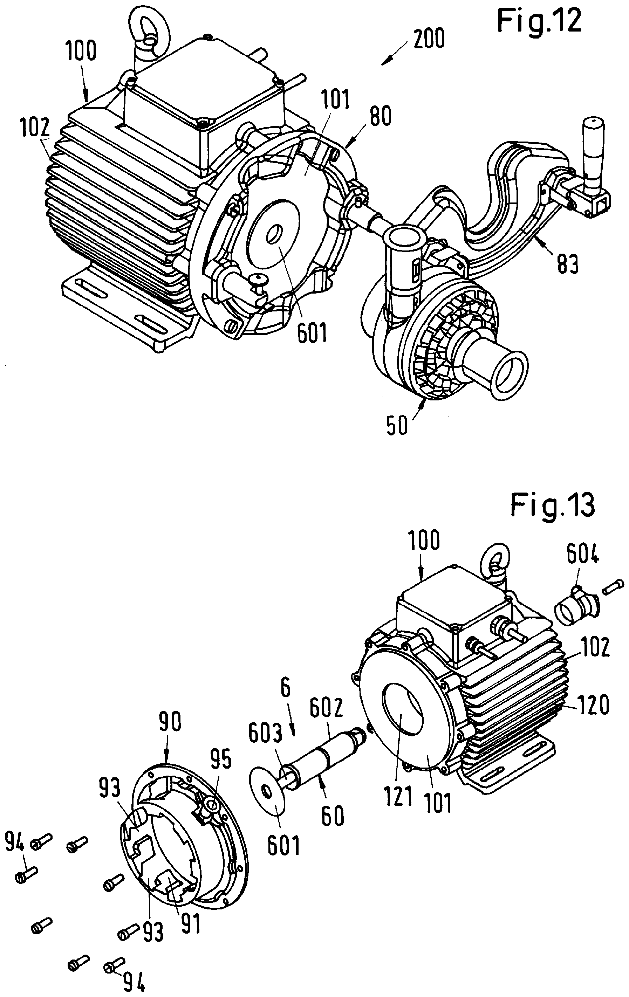

In den Fig. 11 und Fig. 12 ist eine Variante für das dritte Ausführungsbeispiel dargestellt. Fig. 11 zeigt eine perspektivische Explosionsdarstellung der Variante des dritten Ausführungsbeispiels und Fig. 12 eine perspektivische Darstellung der Variante. Dabei ist in analoger Weise wie in Fig. 8 die Pumpeneinheit 50 getrennt vom Stator 100 dargestellt.

Die im Folgenden beschriebene Variante ist in sinngemäss gleicher Weise auch für andere Ausführungsbeispiele möglich, beispielsweise für das zweite Ausführungsbeispiel. Die Variante wird hier beispielhaft für das dritte Ausführungsbeispiel beschrieben.

Bei der in den Fig. 11 und Fig. 12 dargestellten Variante hat der Stator 100 in ähnlicher Weise wie dies im Zusammenhang mit Fig. 3 beschrieben ist, die zentral angeordnete Öffnung 103, die sich von dem zweiten axialen Ende 102 des Stators 100 in axialer Richtung A bis an die becherförmige Ausnehmung 121 erstreckt. Die zentral angeordnete Öffnung 103 ist zylindrisch ausgestaltet. Bei dieser Variante umfasst die Betätigungseinrichtung 6 ein Federelement 60, das in der zentral angeordneten Öffnung 103 angeordnet ist. Das Federelement 60 ist so ausgestaltet, dass es beim Einsetzten der Pumpeneinheit 50 in die becherförmige Ausnehmung 121 in axialer Richtung A gespannt wird. Somit wirkt das Federelement 60 beim Einsetzen der Pumpeneinheit 50 dämpfend. Beim Trennen der Pumpeneinheit 50 vom Stator 100 erleichtert das Federelement 60 durch die in axialer Richtung A wirkende Federkraft das Entfernen der Pumpeneinheit 50 aus der becherförmigen Ausnehmung 121.

Das Federelement 60 ist beispielsweise als eine Gasfeder ausgestaltet. Wie dies insbesondere in Fig. 11 zu erkennen ist, umfasst das Federelement 60 einen Zylinder 602, in welchem ein Stössel 603 in axialer Richtung A bewegbar angeordnet ist. An dem Ende des Stössels 603, das ausserhalb des Zylinders 602 angeordnet ist, ist ein Teller 601 angeordnet, welcher sich in der becherförmigen Ausnehmung 121 befindet. Die becherförmige Ausnehmung 121 ist an ihrem Boden mit einer Durchführung versehen, durch welche sich der Stössel 603 erstreckt. Beim Einsetzen der Pumpeneinheit 50 in die becherförmige Ausnehmung 121 wird der Teller 601 und der Stössel 603 in Richtung des Zylinders 602 verschoben, wodurch in an sich bekannter Weise in dem Zylinder 602 ein Gasvolumen komprimiert wird. Aus dieser Kompression resultiert die Federkraft, welche in axialer Richtung A gerichtet ist, und zwar derart, dass sie den Teller 601 in Richtung des ersten axialen Endes 101 des Stators 100 zu verschieben versucht.

Am zweiten axialen Ende 102 des Stators 100 ist ein Sockelelement 604 vorgesehen, das an dem Stator 100 fixiert ist, und welches in die zentral angeordnete Öffnung 103 hineingreift. Auf diesem fixierten Sockelelement 604 stützt sich das Federelement 60 ab.

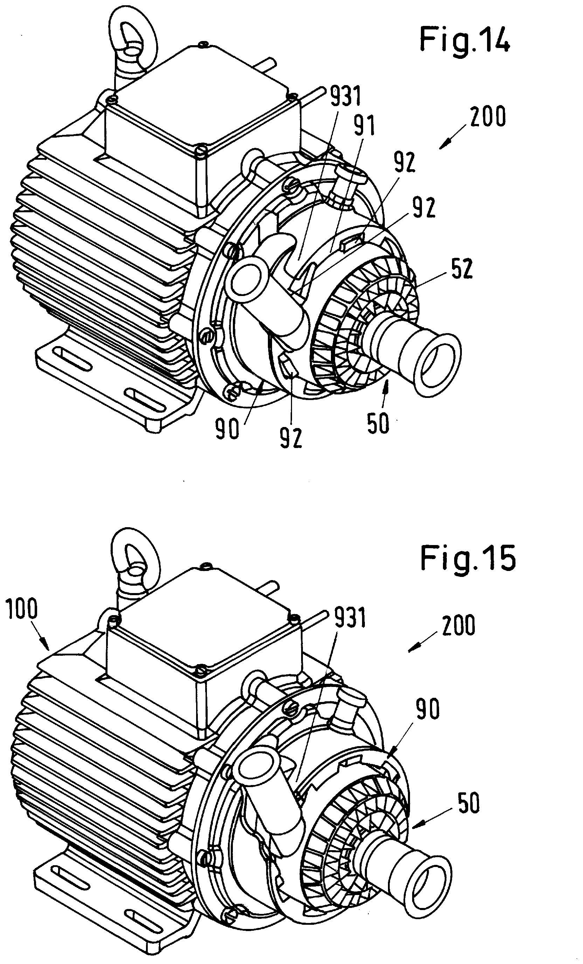

Anhand der Fig. 13 bis Fig. 17 wird im Folgenden ein viertes Ausführungsbeispiel einer Vorrichtung 1 zum Wechseln der Pumpeneinheit 50 erläutert. Fig. 13 zeigt eine perspektivische Darstellung des vierten Ausführungsbeispiels der Vorrichtung 1. In Fig. 13 ist die Pumpeneinheit 50 nicht dargestellt. Die Fig. 14 - Fig. 17 zeigen jeweils in einer perspektivischen Darstellung das vierte Ausführungsbeispiel in verschiedenen Phasen des Einsetzens der Pumpeneinheit 50 in den Stator 100.

Im Folgenden wird nur auf die Unterschiede zu dem ersten, zweiten und dem dritten Ausführungsbeispiel eingegangen. Gleiche Teile oder von der Funktion her gleichwertige Teile des vierten Ausführungsbeispiels sind mit den gleichen Bezugszeichen bezeichnet wie bei den vorangehend beschriebenen Ausführungsbeispielen. Insbesondere haben die Bezugszeichen die gleiche Bedeutung wie sie bereits im Zusammenhang mit dem ersten, zweiten und dem dritten Ausführungsbeispiel erläutert sind. Es versteht sich, dass alle vorangehenden Erläuterungen des ersten, zweiten und dritten Ausführungsbeispiels in gleicher Weise oder in sinngemäss gleicher Weise auch für das vierte Ausführungsbeispiel gelten.

Bei dem vierten Ausführungsbeispiel der erfindungsgemässen Vorrichtung 1 wird die Pumpeneinheit 50 über eine Bajonettverbindung im Stator 100 fixiert. Hierzu umfasst die Vorrichtung 1 einen Bajonettring 90, der an dem ersten axialen Ende 101 des Stators 100 so fixierbar ist, dass der Bajonettring 90 um die becherförmige Ausnehmung 121 herum angeordnet ist. Der Bajonettring 90 ist für eine Bajonettverbindung mit dem Pumpengehäuse 52 der Pumpeneinheit 50 ausgestaltet. Dazu umfasst der Bajonettring 90 eine Mehrzahl von Klauen 91, welche zum Zusammenwirken mit Vorsprüngen 92 (Fig. 14) ausgestaltet sind, wobei die Vorsprünge 92 an der Aussenseite des Pumpengehäuses 52 angeordnet sind. Ferner sind in der radial innenliegenden Oberfläche des Bajonettrings 90 eine Mehrzahl von Aufnahmenuten 93 vorgesehen, mittels welcher die Bajonettverbindung zwischen dem Pumpengehäuse 50 und dem Bajonettring 90 herstellbar und lösbar ist.

Der Bajonettring 90 ist mittels einer Mehrzahl von Befestigungsschrauben 94 auf dem ersten axialen Ende 101 des Stators befestigt, sodass der Bajonettring 90 fest mit dem Stator 100 verbunden ist.

Besonders bevorzugt ist der Bajonettring 90 derart ausgestaltet, dass das Pumpengehäuse durch eine Drehbewegung relativ zum Bajonettring 90 um die axiale Richtung A, eine anschliessende Bewegung in axialer Richtung A und eine daran anschliessende Drehbewegung um die axiale Richtung A in dem Bajonettring 90 fixierbar ist. Dabei erfolgen die beiden Drehbewegungen in der gleichen Richtung. Dazu sind die Aufnahmenuten 93 im Bajonettring 90 entsprechend ausgestaltet. Dies ist am besten in Fig. 13 zu erkennen. Nachdem das Pumpengehäuse in die Aufnahmenuten 93 eingesetzt ist, muss das Pumpengehäuse 52 zunächst relativ zum Bajonettring 90 um die axiale Richtung A gedreht werden, bevor das Pumpengehäuse 52 in den Aufnahmenuten 93 in axialer Richtung A auf den Stator 100 zubewegt werden kann. Nach Beendigung dieser geradlinigen Bewegung muss das Pumpengehäuse 52 nochmals relativ zum Bajonettring 90 um die axiale Richtung A gedreht werden, sodass die Klauen 91 des Bajonettrings 90 mit den Vorsprüngen 92 am Pumpengehäuse 52 in Eingriff kommen, wodurch die Pumpeneinheit 50 in dem Bajonettring 90 fixiert ist. Das Lösen der Pumpeneinheit 50 folgt in sinngemäss umgekehrter Reihenfolge.

Vorzugsweise ist an dem Bajonettring 90 ferner ein Sicherungspin 95 vorgesehen, welcher in eine Ausnehmung im Pumpengehäuse 52 eingreift, sobald das Pumpengehäuse 52 im Bajonettring 90 fixiert ist. Der Sicherungspin 95 hat eine an sich bekannte Schnappfunktion, d.h. er greift selbständig in die Ausnehmung im Pumpengehäuse 52 ein, sobald sich das Pumpengehäuse 52 in der Position ist, in welcher das Pumpengehäuse im Bajonettring 90 fixiert ist. Um die Pumpeneinheit 50 wieder vom Stator zu trennen, muss der Sicherungspin 95 zunächst von Hand aus der Ausnehmung im Pumpengehäuse 50 herausgezogen werden, bevor sich die Bajonettverbindung lösen lässt. Der Sicherungspin 95 verhindert somit eine unbeabsichtigte Trennung der Pumpeneinheit 50 vom Stator 100.

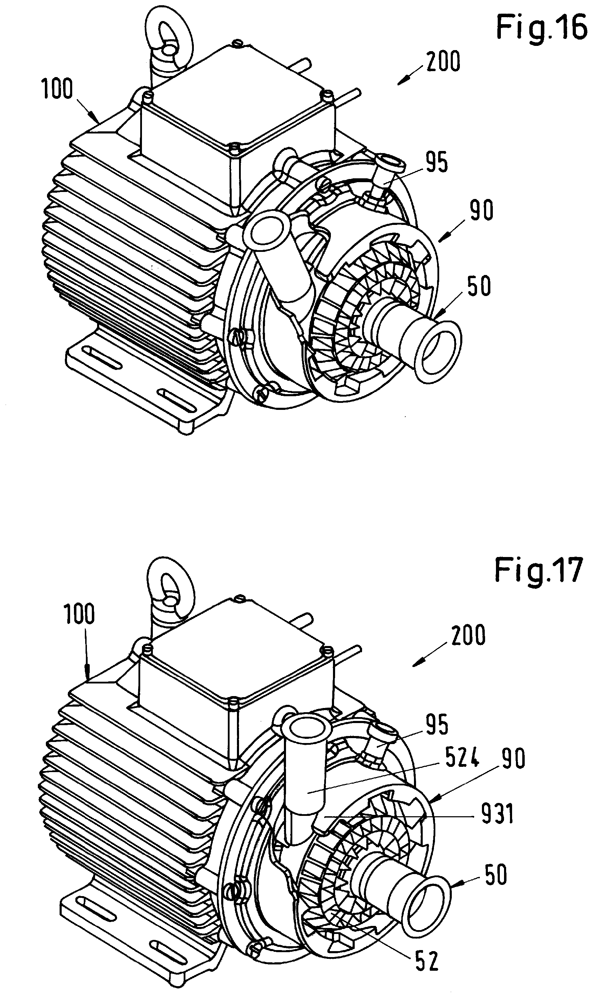

Das Herstellen der Bajonettverbindung zwischen der Pumpeneinheit 50 und dem Stator 100 wird anhand der Fig. 14 bis Fig. 17 erläutert. Zunächst wird die Pumpeneinheit in axialer Richtung A in den Bajonettring 90 hineingeführt, sodass sich die in Fig. 14 dargestellte Position ergibt. Nun wird die Pumpeneinheit 50 um die axiale Richtung A gedreht, gemäss der Darstellung in Fig. 14 und Fig. 15 im Uhrzeigersinn, bis das Pumpengehäuse 50 an einer Nase 931 anliegt, welche die Aufnahmenut 93 begrenzt. Dieser Zustand ist in Fig. 15 gezeigt. Anschliessend wird die Pumpeneinheit 50 in axialer Richtung A auf das erste axiale Ende 101 des Stators 100 zubewegt. Nach dieser Bewegung in axialer Richtung A befindet sich die Pumpeneinheit 50 in der in Fig. 16 dargestellten Position. Dann wird die Pumpeneinheit 50 um die axiale Richtung A gedreht, gemäss der Darstellung in Fig. 16 und Fig. 17 im Uhrzeigersinn. Durch diese Drehbewegung werden die Klauen 91 des Bajonettrings 90 mit den Vorsprüngen 92 am Pumpengehäuse 52 in Eingriff gebracht, die Nase 931 umfasst den Auslass 524 des Pumpengehäuses 52 und der Sicherungspin 95 rastet in die Ausnehmung im Pumpengehäuse 52 ein. Dieser Zustand ist in Fig. 17 gezeigt. In dieser Position ist die Pumpeneinheit 50 in dem Bajonettring 90 fixiert und gegen unbeabsichtigtes Lösen gesichert.

Die Betätigungseinrichtung 6 ist bei dem vierten Ausführungsbeispiel in analoger Weise ausgestaltet wie bei der Variante des dritten Ausführungsbeispiels, welche anhand der Fig. 11 und Fig. 12 erläutert wurde. Die Betätigungseinrichtung 6 umfasst also das Federelement 60, das in der zentral angeordneten Öffnung 103 des Stators 100 angeordnet ist.

Das Federelement 60 ist so ausgestaltet, dass es beim Einsetzten der Pumpeneinheit 50 in die becherförmige Ausnehmung in axialer Richtung A gespannt wird. Somit wirkt das Federelement 60 beim Einsetzen der Pumpeneinheit 50 dämpfend. Beim Trennen der Pumpeneinheit 50 vom Stator 100 bewirkt (oder zumindest erleichtert) das Federelement 60 durch die in axialer Richtung A wirkende Federkraft das Entfernen der Pumpeneinheit 50 aus der becherförmigen Ausnehmung 121.

Das Federelement 60 ist beispielsweise als eine Gasfeder ausgestaltet und umfasst den Zylinder 602, in welchem der Stössel 603 in axialer Richtung A bewegbar angeordnet ist. An dem Ende des Stössels 603, das ausserhalb des Zylinders 602 angeordnet ist, ist der Teller 601 angeordnet, welcher sich in der becherförmigen Ausnehmung 121 befindet. Die becherförmige Ausnehmung 121 ist an ihrem Boden mit einer Durchführung versehen, durch welche sich der Stössel 603 erstreckt. Beim Einsetzen der Pumpeneinheit in die becherförmige Ausnehmung 121 wird der Teller 601 und der Stössel 603 in Richtung des Zylinders 602 verschoben, wodurch in an sich bekannter Weise in dem Zylinder 602 ein Gasvolumen komprimiert wird. Aus dieser Kompression resultiert die Federkraft, welche in axialer Richtung A gerichtet ist, und zwar derart, dass sie den Teller 601 in Richtung des ersten axialen Endes 101 des Stators 100 verschiebt. Am zweiten axialen Ende 102 des Stators 100 ist das Sockelelement 604 vorgesehen, das an dem Stator 100 fixiert ist, und welches in die zentral angeordnete Öffnung 103 hineingreift. Auf diesem fixierten Sockelelement 604 stützt sich das Federelement 60 ab.

## Patentansprüche

1. Vorrichtung zum Wechseln einer Pumpeneinheit (50) einer Zentrifugalpumpe (200), welche die Pumpeneinheit (50) und einen Stator (100) umfasst, der sich in einer axialen Richtung (A) von einem ersten axialen Ende (101) bis zu einem zweiten axialen Ende (102) erstreckt, wobei an dem ersten axialen Ende (101) eine becherförmige Ausnehmung (121) vorgesehen ist, in welche die Pumpeneinheit (50) einsetzbar ist, wobei die Pumpeneinheit (50) ein Pumpengehäuse (52) mit einem Becher (531) umfasst, welcher in die becherförmige Ausnehmung (121) des Stators (100) einsetzbar ist, wobei in dem Pumpengehäuse (52) ein Rotor (51) zum Fördern eines Fluids angeordnet ist, der einen magnetisch wirksamen Kern (511) aufweist, wobei der Rotor (51) um die axiale Richtung (A) rotierbar ist, und wobei der Stator (100) für einen berührungslos magnetischen Antrieb und eine berührungslos magnetische Lagerung des Rotors (51) ausgestaltet ist, wobei der Rotor (51) zumindest in axialer Richtung (A) passiv magnetisch bezüglich des Stators stabilisiert ist, **dadurch gekennzeichnet, dass** die Vorrichtung eine Betätigungseinrichtung (6) umfasst, mit welcher eine mechanische Kraft auf die Pumpeneinheit (50) ausübbar ist, wobei die mechanische Kraft in der axialen Richtung (A) wirkt und derart gerichtet ist, dass sie die Pumpeneinheit (50) in axialer Richtung (A) von dem Stator (100) trennt.

2. Vorrichtung nach Anspruch 1, wobei die Betätigungseinrichtung (6) so ausgestaltet ist, dass die mechanische Kraft an der becherförmigen Ausnehmung (121) im Stator (100) oder an dem Becher (531) des Pumpengehäuses angreift.

3. Vorrichtung nach einem der vorangehenden Ansprüche, wobei die Betätigungseinrichtung (6) einen Kolben (61) umfasst, der in axialer Richtung (A) verschiebbar ist, wobei der Kolben (61) in eine zentral angeordnete Öffnung (103) im Stator (100) einführbar ist, und das Verschieben des Kolbens (61) relativ zum Stator (100) die mechanische Kraft erzeugt welche die Pumpeneinheit (50) in axialer Richtung (a) vom Stator (100) trennt.

4. Vorrichtung nach einem der vorangehenden Ansprüche, wobei die Vorrichtung eine Führungsschiene (66) umfasst, die am Stator (100) fixierbar ist, und wobei auf der Führungsschiene (66) ein in axialer Richtung (A) verschiebbares Stützelement (67) angeordnet ist, welches die Pumpeneinheit (50) beim Trennen von dem Stator (100) gegen Verkippungen schützt.

5. Vorrichtung nach einem der vorangehenden Ansprüche, wobei die Betätigungseinrichtung (6) so ausgestaltet ist, dass die mechanische Kraft an einem Bereich des Pumpengehäuses (52) angreift, welcher ausserhalb der becherförmigen Ausnehmung (121) des Stators (100) angeordnet ist.

6. Vorrichtung nach einem der vorangehenden Ansprüche, wobei die Betätigungseinrichtung (6) ein Federelement (60) umfasst, das in eine zentral angeordneten Öffnung (103) im Stator (100) einführbar ist, wobei das Federelement (60) so ausgestaltet ist, dass es beim Einsetzten der Pumpeneinheit (50) in die becherförmige Ausnehmung (121) in axialer Richtung (A) gespannt wird.

7. Vorrichtung nach einem der vorangehenden Ansprüche mit einer Montageeinrichtung (70), die an dem ersten axialen Ende (101) des Stators (100) fixierbar ist, wobei die Montageeinrichtung (70) einen ringförmigen Sockel (71) aufweist, welcher für das Umfassen des Pumpengehäuses (52) ausgestaltet ist, wobei auf dem Sockel (71) mehrerer Führungselemente (72) angeordnet sind, um das Pumpengehäuse (50) in axialer Richtung (A) in die becherförmige Ausnehmung (121) des Stators (100) zu führen, wobei mehrere Befestigungselemente (75) zum Fixieren des Pumpengehäuses (52) vorgesehen sind, und wobei die Montageeinrichtung (70) mehrere elastische Elemente (79) umfasst, welche in axialer Richtung (A) gespannt sind, wenn die Pumpeneinheit (50) im Stator (100) fixiert ist.

8. Vorrichtung nach einem der Ansprüche 1-6, mit einem Montagering (80), der an dem ersten axialen Ende (101) des Stators (100) so fixierbar ist, dass er um die becherförmige Ausnehmung (121) herum angeordnet ist, wobei auf dem Montagering (80) eine erste und eine zweite Führungsstange (81, 82) angeordnet sind, welche sich jeweils in axialer Richtung (A) erstrecken, wobei an der ersten Führungsstange (81) eine schwenkbare Halteeinrichtung (83) zum Halten der Pumpeneinheit (5) vorgesehen ist, welche in eine Haltestellung schwenkbar ist, in welcher die Halteeinrichtung (83) an der zweiten Führungsstange (82) anliegt, und wobei mindestens ein Spannhebel (85) vorgesehen ist, durch dessen Betätigung die Halteeinrichtung (83) in axialer Richtung (A) entlang der Führungsstangen (81, 82) verschiebbar ist.

9. Vorrichtung nach Anspruch 8, wobei an einer der Führungsstangen (82) ein Verriegelungselement (88) vorgesehen ist, mit welchem die Halteeinrichtung (83) an der Führungsstange (82) fixierbar ist, wenn das Pumpenggehäuse (52) in der becherförmigen Ausnehmung (121) angeordnet ist.

10. Vorrichtung nach einer der Ansprüche 1-6, mit einem Bajonettring (90), der an dem ersten axialen Ende (101) des Stators (100) so fixierbar ist, dass er um die becherförmige Ausnehmung (121) herum angeordnet ist, wobei der Bajonettring (90) für eine Bajonettverbindung mit dem Pumpengehäuse (52) der Pumpeneinheit (50) ausgestaltet ist.

11. Vorrichtung nach Anspruch 10, wobei der Bajonettring (90) derart ausgestaltet ist, dass das Pumpengehäuse (52) durch eine Drehbewegung relativ zum Bajonettring (90) um die axiale Richtung (A), eine anschliessende Bewegung in axialer Richtung (A) und eine daran anschliessende Drehbewegung um die axiale Richtung (A) in dem Bajonettring (90) fixierbar ist.

12. Vorrichtung nach einem der Ansprüche 10 - 11, wobei an dem Bajonettring (90) ein Sicherungspin (95) vorgesehen ist, mit welchem die Pumpeneinheit (50) in dem Bajonettring (90) fixierbar ist, wenn das Pumpenggehäuse (52) in der becherförmigen Ausnehmung (121) angeordnet ist.

13. Zentrifugalpumpe zum Fördern eines Fluids, mit einer Pumpeneinheit (50), und einem Stator (100), der sich in einer axialen Richtung (A) von einem ersten axialen Ende (101) bis zu einem zweiten axialen Ende (102) erstreckt, wobei an dem ersten axialen Ende (101) eine becherförmige Ausnehmung (121) vorgesehen ist, in welche die Pumpeneinheit (50) einsetzbar ist, wobei die Pumpeneinheit (50) ein Pumpengehäuse (52) mit einem Becher (531) umfasst, welcher in die becherförmige Ausnehmung (121) des Stators (100) einsetzbar ist, wobei in dem Pumpengehäuse (52) ein Rotor (51) zum Fördern des Fluids angeordnet ist, der einen magnetisch wirksamen Kern (511) aufweist, wobei der Rotor (51) mit dem Stator (100) einen elektromagnetischen Drehantrieb bildet, wobei der Stator (100) für einen berührungslos magnetischen Antrieb und eine berührungslos magnetische Lagerung des Rotors (51) ausgestaltet ist, wobei der Rotor (51) zumindest in axialer Richtung (A) passiv magnetisch stabilisiert ist, **dadurch gekennzeichnet, dass** eine Vorrichtung zum Wechseln der Pumpeneinheit (50) vorgesehen ist, welche nach einem der vorangehenden Ansprüche ausgestaltet ist.

14. Zentrifugalpumpe nach Anspruch 13, wobei die Vorrichtung (1) zum Wechseln der Pumpeneinheit (50) so ausgestaltet ist, dass sie jeweils nach dem Wechseln der Pumpeneinheit (50) von der Zentrifugalpumpe (100) entfernbar ist.

15. Zentrifugalpumpe nach einem der Ansprüche 13 -14, bei welcher der elektromagnetische Drehantrieb als Tempelmotor ausgestaltet ist, wobei der Stator (100) eine Mehrzahl von Spulenkernen (125) aufweist, von denen jeder einen Längsschenkel (126) umfasst, welcher sich von einem ersten Ende in axialer Richtung (A) bis zu einem zweiten Ende erstreckt, sowie einen Querschenkel (127), welcher an dem zweiten Ende des Längsschenkels (126) angeordnet ist, und sich in einer radialen Richtung erstreckt, die senkrecht zur axialen Richtung (A) ist, wobei die Spulenkerne (125) bezüglich der Umfangsrichtung um den Rotor (51) herum angeordnet sind, sodass der Rotor (51) zwischen den Querschenkeln (127) der Spulenkerne (125) angeordnet ist, und wobei an jedem Längsschenkel (126) mindestens eine konzentrierte Wicklung (160, 161) vorgesehen ist, welche den jeweiligen Längsschenkel (126) umgibt.
